# EUROPÄISCHE PATENTSCHRIFT

(11) **EP 2 238 942 B1**
(45) Veröffentlichungstag und Bekanntmachung des Hinweises auf die Patenterteilung: **02.03.2016**
(21) Anmeldenummer: 10158858.0
(22) Anmeldetag: 31.03.2010
(51) Int. Cl.: A61C 5/06

(54) **Misch- und Applikationskapsel zur Herstellung eines Dentalpräparates**
Mixing and application capsule for producing a dental preparation
Capsule de mélange et d'application pour la fabrication d'une préparation dentaire

(30) Priorität: 08.04.2009 DE 102009016862
(43) Veröffentlichungstag der Anmeldung: 13.10.2010
(73) Patentinhaber: VOCO GmbH, 27472 Cuxhaven (DE)
(72) Erfinder: Leiner, Uwe, 2747, Cuxhaven (DE); Plaumann, Manfred Thomas, 27472, Cuxhaven (DE)
(74) Vertreter: Eisenführ Speiser

(56) Entgegenhaltungen:
- EP-A2- 1 759 657
- DE-U1- 9 303 268
- US-A- 4 863 017
- US-A- 5 172 807
- US-A- 5 871 355

## Beschreibung

Die vorliegende Erfindung betrifft eine Misch- und Applikationskapsel zur Herstellung eines Dentalpräparates.

Misch- und Applikationskapseln ermöglichen eine Vermischung von festen und fluiden Komponenten, um beispielsweise ein Dentalpräparat herzustellen, welches sodann aus der Misch- und Applikationskapsel in der Mundhöhle des Patienten appliziert wird. Zur Herstellung von Glasionomerzement wird beispielsweise eine Pulverkomponente mit einer Flüssigkeitskomponente vermischt. Im Stand der Technik sind verschiedene Methoden bekannt, um die Flüssigkeit unterzubringen, die bei Aktivierung der Misch- und Applikationskapsel mit der pulverförmigen Komponente vermischt wird, um das Dentalpräparat herzustellen.

Die Flüssigkeit wird beispielsweise in einem Folienbeutel untergebracht, der durch Aufplatzen geöffnet wird. Der Folienbeutel wird anschließend ausgedrückt, um die Flüssigkeit aus diesem zu pressen und der pulverförmigen Komponente zuzuführen. Dieses Verfahren weist den Nachteil auf, dass es insbesondere bei einem im Verhältnis zum Beuteldurchmesser sehr langen Beutel vorkommt, dass die Folie beim Zusammendrücken Falten wirft, in denen ein unbestimmter Flüssigkeitsrest verbleibt. Das Ergebnis ist, dass die Dentalpräparatmasse mit zu wenig Flüssigkeit vermengt wird, so dass sie nicht die gewünschten Eigenschaften aufweist. Daher sind entweder die Größe des Folienbeutels und damit die Flüssigkeitsmenge beschränkt oder aber die Dosierung erfolgt ungenau. Der Durchmesser des Folienbeutels lässt sich in der Regel nicht beliebig variieren, da die Kapsel einen entsprechend größeren Durchmesser aufweisen müsste. Eine Kapsel mit großem Durchmesser ist jedoch von Nachteil bei der Applikation in der Mundhöhle eines Patienten. Auch sind die zum Ausdrücken der Misch- und Applikationskapsel verwendeten Ausdrückzangen üblicherweise für kleine Kapseldurchmesser ängepasst.

Eine Variation besteht darin, dass ein Folienbeutel seitlich auf bzw. an dem Kapselkörper angeordnet ist. Ein solcher Beutel kann daher einen deutlich größeren Durchmesser und Flüssigkeitsmenge aufweisen. Jedoch besteht der Nachteil, dass ein separates Aktivierwerkzeug erforderlich ist, um den Folienbeutel zu öffnen und dessen Inhalt in der Kapsel in Kontakt mit dem Pulver zu bringen (d.h., um die Kapsel zu aktivieren). Auch verbleibt in einem Beutel mit großem Durchmesser proportional mehr Flüssigkeit.

Ein weiteres Beispiel einer Flüssigkeitsunterbringung in einer Misch- und Applikations-kapsel zur Herstellung eines Dentalpräparates ist in US 6,386,872 B1 beschrieben. Im Inneren des Kapselkörpers sind ein erster und ein zweiter Kolben angeordnet, in deren Zwischenraum eine Flüssigkeit angeordnet ist. Der erste Kolben begrenzt den Mischraum im Inneren des Kolbenkörpers, in dem die pulverförmige Komponente angeordnet ist. Die Kolbenwand zwischen Mischkammer und Flüssigkeitsraum weist eine Sollbruchstelle auf. Wird der zweite Kolben in Richtung der Mischkammer geschoben, durchbricht ein Vorsprung des zweiten Kolbens die Sollbruchstelle der Wand des ersten Kolbens, so dass die Flüssigkeit in die Mischkammer fließt, um sich dort mit der pulverförmigen Komponente zu vermischen. Nach der Aktivierung, beispielsweise indem die Kapsel von Hand auf eine Tischoberfläche gedrückt wird, muss die Kapsel in ein Mischgerät eingespannt werden, welches Pulver und Flüssigkeit durch Schüttelbewegungen zu einer Paste vermischt.

Anschließend wird die Kapsel in eine Ausdrückzange eingespannt, mit deren Hilfe beide Kolben weiter nach vorne bewegt werden. Die Paste wird dabei durch die Kanüle ausgetragen und beispielsweise in eine Kavität eines zu behandelnden Zahnes gefüllt.

Die Anordnung gemäß US 6,386,872 B1 weist den Nachteil auf, dass Diffusionsverluste der Flüssigkeit bestehen und die Misch- und Applikationskapsel daher nicht geeignet ist, über einen längeren Zeitraum hinweg gelagert zu werden. Die Dichtung zwischen dem ersten und zweiten Kolben ist eine schleifende Dichtung. Ist die Dichtung leichtgängig gewählt, so dass eine Verschiebung des zweiten Kolbens gegenüber dem ersten Kolben manuell möglich ist, ist keine ausreichende Dichtung gegeben und die Flüssigkeit kann zwischen erstem und zweitem Kolben verdunsten. Wird die Dichtung so eng gewählt, dass eine Verdunstung der Flüssigkeit durch die Dichtung nahezu vollständig vermieden wird, lässt sich der zweite Kolben gegenüber dem ersten Kolben nur unter Aufwendung einer großen Kraft verschieben, die spezielle Werkzeuge erfordert und nicht mehr manuell möglich ist. Ferner besteht ein ähnliches Problem der Flüssigkeitsverdunstung für die Dichtung zwischen dem ersten Kolben und dem Kapselkörper. Die pulverförmige Komponente im Mischraum ist hygroskopisch und neigt daher dazu, durch die Dichtung zwischen ersten Kolben und Kapselkörper eintretende Feuchtigkeit aufzunehmen. Auch dies beeinträchtigt die Langzeitlagerfähigkeit der Misch- und Applikationskapsel. Zusätzlich ist der dünnwandige Sollbruchstellenbereich der Wand des ersten Kolbens leicht für die Flüssigkeit zu durchdringen. Die pulverförmige Komponente kann also nicht nur über die Dichtung zwischen erstem Kolben und Kapselkörper, sondern auch durch den Sollbruchstellenbereich der Wand des ersten Kolbens Feuchtigkeit aus der Flüssigkeit aufnehmen.

Weitere Beispiele, ebenfalls mit schleifender Dichtung, finden sich z.B. in EP 1 226 790 oder auch in JP 2001340356.

WO 03/028871 A1 offenbart eine Mischkapsel für eine Zweikomponentenmischung mit einem zylindrischen Behälterteil und einer an der Stirnseite angeformten Ausspritzdüse. Ein Kolben ist im Behälterteil axial verschiebbar geführt. In der Stirnseite des Kolbens ist eine Öffnung vorgesehen, an welche ein Flüssigkeitsbehältnis mit einer berstbaren Wand oder Membran anschließt. In nicht aktiviertem Zustand der Kapsel verschließt die Membran die Öffnung. Der Hohlraum zwischen den Stirnseiten des Behälterteils und des Kolbens bildet einen Mischraum. Im Mischraum ist ein bewegliches Aktivierungsteil vorgesehen. Das Aktivierungsteil ist mittels eines die Ausspritzdüse im nicht-aktivierten Zustand verschließenden Aktivierungsstifts verschiebbar. Im aktivierten Zustand der Kapsel ist das Aktivierungsteil im Wesentlichen vollständig im Flüssigkeitsbehältnis aufgenommen.

Die Druckschrift DE 93 03 268 U1 betrifft eine Mehrkomponenten-Mischkapsel mit Ausspritzeinrichtung für die gemischte Masse, vornehmlich für Dentalzwecke. Die Druckschrift offenbart insbesondere eine Misch- und Applikationskapsel nach dem Oberbegriff von Anspruch 1.

Der Erfindung liegt die Aufgabe zugrunde, eine Misch- und Applikationskapsel zur Verfügung zu stellen, die die oben erwähnten Nachteile des Standes der Technik beseitigt.

Erfindungsgemäß wird die Aufgabe durch eine Misch- und Applikationskapsel zur Herstellung eines Dentalpräparates gemäß Anspruch 1 gelöst.

Der Erfindung liegt die Idee zugrunde, dass der erste Kolbenkörper ein Doppelkolben ist, wobei der Vorsprung als erster Kolben des Doppelkolbens zum Auspressen eines Inhaltes des Hohlraumes und die Begrenzung zum Mischraum als zweiter Kolben des Doppelkolbens ausgestaltet ist. Bevorzugt ist die Misch- und Applikationskapsel als Teleskopzylinder ausgestaltet, wobei der erste Kolbenkörper ein erster Zylinder und der zweite Kolbenkörper ein zweiter Zylinder ist, wobei der erste Zylinder teleskopartig in dem Kapselkörper verschiebbar ist und der zweite Zylinder teleskopartig in dem ersten Zylinder verschiebbar ist. Bei Aktivierung der Misch- und Applikationskapsel wird eine Relativbewegung zwischen erstem und zweitem Kolbenkörper ausgeführt, wobei der Vorsprung des ersten Kolbenkörpers als Stempel wirkt und den Hohlraum des zweiten Kolbenkörpers so ausfüllt, dass dessen Inhalt herausgepresst wird. Entsprechend bevorzugt ist der Vorsprung des ersten Kolbenkörpers ein Stempel, der so ausgestaltet ist, dass, wenn der Stempel in den Hohlraum eingeführt wird, ein im Hohlraum befindlicher Inhalt verdrängt und der Hohlraum geleert wird. Es ist ferner bevorzugt, dass die positive Form des Vorsprungs des ersten Kolbenkörpers der negativen Form des die Flüssigkeit aufnehmenden Hohlraumes entspricht bzw. die negative Form des die Flüssigkeit aufnehmenden Hohlraumes der positiven Form des Vorsprunges des ersten Kolbenkörpers entspricht. Bei Ausbringung des Dentalpräparates wirkt das den Mischraum begrenzende Ende des ersten Kolbenkörpers als Kolben, um das angemischte Dentalpräparat aus dem Kapselkörper herauszudrücken. Entsprechend weist eine bevorzugte erfindungsgemäße Misch- und Applikationskapsel auf: einen Kapselkörper mit einem Mischraum zum Aufnehmen einer Mischkomponente und zum Mischen des Dentalpräparates aus der Mischkomponente und einer Flüssigkeit und mit einer Austrittsöffnung zum Ausbringen des Dentalpräparates, einen Flüssigkeitsbehälter mit einem Hohlraum zum Aufnehmen der Flüssigkeit und einen Doppelkolbenkörper, der zwischen dem Mischraum und dem Flüssigkeitsbehälter angeordnet ist und einen Kanal zum Führen der Flüssigkeit von dem Hohlraum in den Mischraum aufweist, wobei der Doppelkolbenkörper an dem dem Flüssigkeitsbehälter zugewandten ersten Ende ausgestaltet ist, um eine im Hohlraum angeordnete Flüssigkeit aus dem Hohlraum heraus zu drücken, so dass die Flüssigkeit in den Kanal abgeführt wird, und wobei der Doppelkolbenkörper an dem dem Mischraum zugewandten zweiten Ende ausgestaltet ist, um eine im Mischraum hergestellte Dentalmasse aus der Austrittsöffnung zu drücken.

Durch die erfindungsgemäße Ausgestaltung der Misch- und Applikationskapsel wird eine besonders dichte Flüssigkeitsbarriere erreicht. Die erfindungsgemäße Kapsel bietet den Vorteil, dass die Flüssigkeit, die in einem Hohlraum im zweiten Kolbenkörper angeordnet ist, nicht durch die Dichtung zwischen erstem und zweitem Hohlkörper verdunsten kann. Eine leichtgängig manuelle Verschiebbarkeit des zweiten Kolbenkörpers gegenüber dem ersten Kolbenkörper ist ferner gewährleistet. Auch bietet die erfindungsgemäße Misch-und Applikationskapsel den Vorteil, dass vermieden wird, dass die Flüssigkeit durch den ersten Kolbenkörper diffundiert und sich mit der Komponente im Mischraum vermischt, da die dem Pulver zugewandte Seite beispielsweise mit einer Sperrschichtfolie verschlossen und damit nicht permeabel ist.

Ein weiterer Vorteil der erfindungsgemäßen Misch- und Applikationskapsel ist, dass die den Hohlraum verschließende Folie je nach Ausführungsform beim Öffnen schlagartig aufreißt, wodurch die Flüssigkeit mit einer hohen Geschwindigkeit in die Pulverkomponente gespritzt wird. Eine unvollständige Flüssigkeitsentleerung kann dadurch vermieden werden.

Ein weiterer Vorteil der erfindungsgemäßen Misch- und Applikationskapsel besteht darin, dass auf die Verwendung eines deformierbaren Folienbeutels verzichtet werden kann. Da bei Aktivierung der erfindungsgemäßen Misch- und Applikationskapsel der Vorsprung des ersten Kolbenkörpers im Hohlraum des zweiten Kolbenkörpers aufgenommen wird, wird das Fluid vollständig aus dem Hohlraum herausgepresst. Das Mischverhältnis kann auf diese Weise sehr genau eingehalten werden. Auch ist die Flüssigkeitsmenge weniger stark beschränkt, da der Hohlraum im zweiten Kolbenkörper entsprechend tief gewählt werden kann.

Ein weiterer Vorteil der erfindungsgemäßen Misch- und Applikationskapsel besteht darin, dass kein separates Werkzeug zur Aktivierung erforderlich ist, da das Aktivieren durch Aufbringung eines Drucks auf den zweiten Kolbenkörper erfolgt.

Ferner ist die Handhabung der erfindungsgemäßen Misch- und Applikationskapsel besonders einfach, da beide Kolbenkörper in ein und derselben Richtung innerhalb der erfindungsgemäßen Misch- und Applikationskapsel verschoben werden, um die Misch-und Applikationskapsel zu aktivieren und anschließend das Dentalpräparat auszubringen. Dieser Vorteil wird insbesondere dadurch erreicht, dass das den Mischraum begrenzende Ende des ersten Kolbenkörpers bei Ausbringung des Dentalpräparates als Kolben wirkt, um das angemischte Dentalpräparat aus dem Kapselkörper herauszudrücken.

Bevorzugt ist der Hohlraum zur Aufnahme einer Flüssigkeitskapsel ausgestaltet. Bevorzugt ist eine Flüssigkeitskapsel ein hermetisch abgeschlossener Körper. Eine solche Ausgestaltung der erfindungsgemäßen Misch- und Applikationskapsel ist besonders vorteilhaft, da die Komponenten Kapselkörper, erster und zweiter Kolbenkörper für eine Vielzahl von verschiedenen Flüssigkeitskapseln identisch ausgebildet sein können. Verschiedenen Flüssigkeitskapseln können unterschiedliche Flüssigkeiten oder unterschiedliche Flüssigkeitsmengen aufweisen.

Bevorzugt ist der zweite Kolbenkörper als eine Flüssigkeitskapsel ausgestaltet. Diese Ausführungsform ist besonders vorteilhaft, da Kapselkörper und erster Kolbenkörper als Standardkomponenten ausgebildet sein können, wodurch eine zeit- und kostengünstige Produktion ermöglicht wird. Der zweite Kolbenkörper kann für verschiedene Mischzwecke verschieden ausgebildet sein, d.h. er kann beispielsweise unterschiedliche Flüssigkeiten oder unterschiedliche Flüssigkeitsmengen aufweisen.

Erfindungsgemäß ist die Flüssigkeitskapsel mit einer Folie verschlossen. Besonders bevorzugt ist die Flüssigkeitskapsel hermetisch mit einer leicht reißfähigen Folie verschlossen. Dies ist besonders vorteilhaft, um bereits mit leichtem Druck auf den zweiten Kolbenkörper eine Öffnung der Flüssigkeitskapsel zu ermöglichen.

Bevorzugt weist die Folie wenigstens eine Schicht auf, die wenigstens teilweise eine Metallschicht ist. Bevorzugt ist, dass die Folie gasundurchlässig ist. Bevorzugt weist ein zentraler Bereich der Folie eine Metallschicht auf. Bevorzugt besteht die Metallschicht aus einem harten, leicht reißfähigen Aluminium. Bevorzugt weist ein radialer Bereich der Folie eine Metallschicht auf. Bevorzugt ist die Folie auf mindestens einer Seite siegelfähig beschichtet. Die Siegelschicht weist bevorzugt einen Heißsiegellack auf. Diese kombiniert oder alternativ verwendeten Ausführungsformen weisen den Vorteil auf, dass die Folie als Flüssigkeitsbarriere insbesondere zu einer Komponente im Mischraum dient. Insbesondere eine Verdunstung durch die Folie kann so besonders effektiv vermieden werden.

Bevorzugt weist die Flüssigkeitskapsel wenigstens teilweise Metall auf. Metall dient vorteilhafterweise als Verdunstungs- und Verflüchtigungsbarriere für die Flüssigkeit. Es ist daher bevorzugt, dass die Flüssigkeitskapsel wenigstens teilweise aus Metall gefertigt ist. Ferner ist die Innenschicht bevorzugt ebenfalls siegelfähig beschichtet, beispielsweise mit einem Heißsiegellack. Auch andere Sperrschichtwerkstoffe oder mehrschichtige Aufbauten mit mindestens einer Sperrschicht sind denkbar. Als Sperrschichten kommen je nach verwendeter Flüssigkeit beispielsweise Polyvinylalkohol, keramische Füllstoffe oder andere Materialien in Frage, die der Fachmann dem Zweck entsprechend auswählen wird.

Bevorzugt weist die Misch- und Applikationskapsel, insbesondere der erste Kolbenkörper, ein Widerstandselement zum kontrollierten Verhindern eines Verschiebens des ersten Kolbenkörpers in den Kapselkörper auf. Das Verschieben des ersten Kolbenkörpers wird bevorzugt so kontrolliert, dass das Verschieben des ersten Kolbenkörpers erst möglich ist, wenn der Vorsprung des ersten Kolbenkörpers in den Hohlraum des zweiten Kolbenkörpers eingeführt ist bzw. soweit in den Hohlraum des zweiten Kolbenkörpers eingeführt ist, dass der Hohlraum entleert ist. Bevorzugt ist das Widerstandselement dadurch realisiert, dass der Außendurchmesser des ersten Kolbenkörpers wenigstens teilweise größer als der Innendurchmesser des Kapselkörpers ist. Durch eine solche Anordnung wird vorteilhaft erreicht, dass der erste Kolbenkörper nicht unbeabsichtigt in den Kapselkörper eingeschoben werden kann. Es ist bevorzugt, dass der größere Außendurchmesser durch mindestens eine Lasche ausgestaltet ist, wobei die Lasche bevorzugt aus dem Kapselkörper herausragt. Es ist auch bevorzugt, dass die Lasche in eine Ringnut im Inneren des Kapselkörpers eingreift. Bevorzugt weist der erste Kolbenkörper einen Laschenkranz an demjenigen Ende auf, welches den zweiten Kolbenkörper aufnimmt. Bevorzugt weist der Laschenkranz radial nach außen gebogene Laschen, oder radial nach außen überstehende Laschen und parallel zur Längsachse des ersten Kolbenkörpers ausgerichtete Laschen, auf. Bei Aktivierung der erfindungsgemäßen Misch- und Applikationskapsel wird durch Aufbringen einer ersten Kraft der zweite Kolbenkörper in den ersten Kolbenkörper geschoben. Bevorzugt ist eine zweite Kraft erforderlich, um die Lasche zu verbiegen und die Verschiebbarkeit des ersten Kolbenkörpers freizugeben bzw. zu ermöglichen, wobei die zweite Kraft größer als die erste Kraft ist. Besonders bevorzugt weist der Kapselkörper eine Ringkerbe auf, um die Lasche oder die Laschen aufzunehmen. Besonders bevorzugt weist der zweite Kolbenkörper an seinem Ende, welches aus dem Kapselkörper ragt, eine Einkerbung auf, die die Lasche aufnimmt, so dass eine Verschiebung des ersten Kolbenkörpers erst freigegeben ist, wenn die Lasche in der Einkerbung eingerastet ist, d.h. der zweite Kolbenkörper, insbesondere vollständig, in den ersten Kolbenkörper eingeführt ist. Besonders bevorzugt ist eine erfindungsgemäße Misch- und Applikationskapsel gemäß der Erfindung so ausgestaltet, dass der erste Kolbenkörper als Hülse zur Aufnahme des zweiten Kolbenkörpers ausgestaltet ist, der erste Kolbenkörper radial nach außen gebogene und aus dem Kapselkörper herausragende Laschen an demjenigen Ende aufweist, welches den zweiten Kolbenkörper aufnimmt, der zweite Kolbenkörper eine Einkerbung aufweist, die Einkerbung als Ringspalt ausgestaltet ist, und die Laschen und Ringspalt so als Paarung ausgebildet sind, dass ein Verschieben des ersten Kolbenkörpers erst möglich ist, wenn die Lasche in dem Ringspalt angeordnet ist. Es wird so vorteilhaft sichergestellt, dass in einem ersten Schritt die Flüssigkeit im Hohlraum des zweiten Kolbenkörpers vollständig aus diesem herausgedrückt wird bevor in einem weiteren Schritt die hergestellte Dentalmasse ausgebracht wird.

Eine weitere bevorzugt Ausgestaltung, um die unbeabsichtigte Verschiebung des ersten Kolbenkörpers während der Aktivierung, d.h. während des Auspressens der Flüssigkeit, zu unterbinden, ist die Schaffung entsprechend zweckmäßig gewählter Reibverhältnisse.

Bevorzugt weist der Kapselkörper eine Entlüftungsvorrichtung zum Abführen eines Gases aus dem Mischraum des Kapselkörpers auf. Bevorzugt ist eine solche Entlüftungsvorrichtung als gasdurchlässige Filtermembran ausgestaltet, die für die Mischkomponente im Mischraum undurchlässig ist und in wenigstens einem Teil der Außenwand des Kolbenkörpers angeordnet ist. Eine solche Filtermembran ist beispielsweise in US 2004/0104133 A1 beschrieben, auf deren offenbarte Filtermembran hiermit Bezug genommen wird. Ferner ist bevorzugt, dass die Dichtung zwischen Kapselkörper und erstem Kolbenkörper Entlüftungsschlitze aufweist. Bevorzugt sind die Entlüftungsschlitze auf der äußeren Oberfläche des ersten Kolbenkörpers angeordnet und unterbrechen ein ringförmiges Dichtelement des ersten Kolbenkörpers. Solche Ausgestaltungen sind bevorzugt, da die Luft im Inneren des Kapselkörpers besonders zügig abgeführt werden kann, wodurch der Flüssigkeit, das Eindringen in die Mischkammer erleichtert wird. Diese geschlitzte Dichtung ist bevorzugt mehrfach hintereinander ausgeführt, wobei die Schlitze zueinander versetzt sind, wodurch eine Art Labyrinthdichtung erzielt wird.

Erfindungsgemäß ist der Vorsprung des ersten Kolbenkörpers ausgestaltet, um die Flüssigkeitskapsel zu öffnen. Es ist bevorzugt, dass der Vorsprung des ersten Kolbenkörpers ausgestaltet ist, um die Folie aufzustechen, aufzudrücken, aufzuschneiden, aufzubrechen, und/oder aufzustanzen. Diese Ausführungsform der erfindungsgemäßen Misch- und Applikationskapsel ist von Vorteil, da in dem Verfahrensschritt des Drückens des zweiten Kolbenkörpers in den ersten Kolbenkörper sowohl ein Öffnen der Flüssigkeitskapsel als auch ein Auspressen der Flüssigkeit in einer Bewegung erreicht wird.

Bevorzugt weist der Vorsprung des ersten Kolbenkörper Mittel zum Ausstanzen eines Bereichs der Folie auf, der dem Kanal gegenüber liegt. Mittels dieser Ausführungsform der erfindungsgemäßen Misch- und Applikationskapsel wird besonders vorteilhaft erreicht, dass nur der für die Überführung der Flüssigkeit von dem Hohlraum in den Mischraum relevante Bereich der Folie, nämlich der, der dem Kanal gegenüber liegt, geöffnet wird. Ein Verlust von Flüssigkeit in radialer Richtung wird so vermieden.

Besonders bevorzugt ist eine erfindungsgemäße Misch- und Applikationskapsel zur Herstellung eines Dentalpräparates, die aufweist: einen Kapselkörper mit einem Mischraum zum Aufnehmen einer Mischkomponente und zum Mischen des Dentalpräparates aus der Mischkomponente und einem Fluid und einer Austrittsöffnung zum Ausbringen des Dentalpräparates, einen im Kapselkörper verschiebbaren ersten Kolbenkörper, der den Mischraum im Kapselkörper begrenzt und der einen Kanal zum Führen des Fluids von einem Hohlraum in den Mischraum und einen Vorsprung aufweist, und einen im Kapselkörper verschiebbaren zweiten Kolbenkörper, der den Hohlraum zum Aufnehmen des Fluids aufweist, wobei der Hohlraum ausgestaltet ist, um den Vorsprung des ersten Kolbenkörpers aufzunehmen, wobei die Misch- und Applikationskapsel ferner ein Kanülen-Schwenk-Element an der Austrittsöffnung zum Applizieren des Dentalpräparates aufweist, wobei der Kapselkörper eine gasdurchlässige Filtermembran und/oder die Dichtung zwischen Kapselkörper und erstem Kolbenkörper Entlüftungsschlitze zum Abführen eines Gases aus dem Mischraum des Kapselkörpers aufweist, wobei der zweite Kolbenkörper als eine Flüssigkeitskapsel ausgestaltet ist und die Flüssigkeitskapsel mit einer Aluminiumfolie verschlossen ist, wobei die Aluminiumfolie auf wenigstens einer Seite siegelfähig beschichtet ist, wobei der erste Kolbenkörper mindestens einen Laschenkranz mit radial nach außen gebogenen und aus dem Kapselkörper herausragenden Laschen und der zweite Kolbenkörper an seinem aus dem Kapselkörper herausragenden Ende eine Einkerbung aufweist, wobei die Einkerbung zum Aufnehmen der gebogenen Laschen ausgestaltet ist, wobei der erste Kolbenkörper eine Randausnehmung aufweist, die ausgestaltet ist, um einen Randvorsprung des zweiten Kolbenkörpers aufzunehmen, und wobei der Vorsprung des ersten Kolbenkörpers Dorne zum Ausstanzen eines Bereiches der Folie aufweist, der dem Kanal gegenüberliegt.

Alternativ zum hier gezeigten Kanülen-Schwenk-Element ist auch beispielsweise anderer Öffnungsmechanismus denkbar, wie er zum Beispiel in DE19906887C1 beschrieben ist.

Erfindungsgemäß weist der Vorsprung des ersten Kolbenkörpers eine Schneide zum Aufschneiden der Folie auf, wobei die Schneide entlang des Umfanges des Vorsprungs angeordnet ist. Bevorzugt weist der Vorsprung des ersten Kolbenkörpers sich radial vom Kanal zur Schneide erstreckende Erhebungen zum Unterstützen des Abflusses der Flüssigkeit in den Kanal auf. Solche Ausgestaltungen der erfindungsgemäßen Misch- und Applikationskapsel bieten den Vorteil, dass ein langer Bereich der Folie gleichzeitig aufgeschnitten wird und die Flüssigkeit aus dem Hohlkörper schnell durch den Kanal abgeführt werden kann. Es wird so das Risiko eines Flüssigkeitsverlustes vermieden.

Besonders bevorzugt ist eine erfindungsgemäße Misch- und Applikationskapsel zur Herstellung eines Dentalpräparates, die aufweist: einen Kapselkörper mit einem Mischraum zum Aufnehmen einer Mischkomponente und zum Mischen des.Dentalpräparates aus der Mischkomponente und einem Fluid und einer Austrittsöffnung zum Ausbringen des Dentalpräparates, einen im Kapselkörper verschiebbaren ersten Kolbenkörper, der den Mischraum im Kapselkörper begrenzt und der einen Kanal zum Führen des Fluids von einem Hohlraum in den Mischraum und einen Vorsprung aufweist, und einen im Kapselkörper verschiebbaren zweiten Kolbenkörper, der den Hohlraum zum Aufnehmen des Fluids aufweist, wobei der Hohlraum ausgestaltet ist, um den Vorsprung des ersten Kolbenkörpers aufzunehmen, wobei die Misch- und Applikationskapsel ferner ein Kanülen-Schwenk-Element an der Austrittsöffnung zum Applizieren des Dentalpräparates aufweist, wobei der Kapselkörper eine gasdurchlässige Filtermembran und/oder die Dichtung zwischen Kapselkörper und erstem Kolbenkörper Entlüftungsschlitze zum Abführen eines Gases aus dem Mischraum des Kapselkörpers aufweist, wobei der zweite Kolbenkörper als eine Flüssigkeitskapsel ausgestaltet ist und die Flüssigkeitskapsel mit einer Aluminiumfolie verschlossen ist, wobei die Aluminiumfolie auf wenigstens einer Seite siegelfähig beschichtet ist, wobei der erste Kolbenkörper mindestens einen Laschenkranz mit radial nach außen gebogenen und aus dem Kapselkörper herausragenden Laschen und der zweite Kolbenkörper an seinem aus dem Kapselkörper herausragenden Ende eine Einkerbung aufweist, wobei die Einkerbung zum Aufnehmen der gebogenen Laschen ausgestaltet ist, wobei der erste Kolbenkörper eine Randausnehmung aufweist, die ausgestaltet ist, um einen Randvorsprung des zweiten Kolbenkörpers aufzunehmen, und wobei der Vorsprung des ersten Kolbenkörpers eine Schneide zum Aufschneiden der Folie und sich radial vom Kanal zur Schneide erstreckende Erhebungen aufweist, wobei die Schneide entlang des Umfanges des Vorsprungs angeordnet ist.

Bevorzugt weist der zweite Kolbenkörper einen Vorsprung auf, um die Flüssigkeitskapsel zu öffnen. Bevorzugt ist der Vorsprung des zweiten Kolbenkörpers kegelförmig ausgebildet. Bevorzugt ist der Vorsprung des zweiten Kolbenkörpers ausgestaltet, um die Folie aufzustechen, aufzudrücken, aufzuschneiden, aufzubrechen, und/oder aufzustanzen. Bevorzugt sind der Vorsprung des ersten Kolbenkörpers und der Vorsprung des zweiten Kolbenkörpers ausgestaltet, um die Folie durch beidseitige Krafteinwirkung zu öffnen. Eine solche Anordnung bietet den Vorteil, dass die Flüssigkeitskapsel in derjenigen Richtung geöffnet wird, in welcher die Flüssigkeit zu fließen hat, um in den Mischraum einzudringen. Durch die Bewegung des Vorsprungs des zweiten Kolbenkörpers in Richtung des Mischraumes wird die Bewegung des Fluids entsprechend eingeleitet, wodurch Flüssigkeitsverluste weiter vermieden werden.

Ein weiterer Vorteil dieser Ausgestaltung ist, dass der Flüssigkeitskanal des ersten Kolbenkörpers bei vollständiger Verschiebung des zweiten Kolbenkörpers von dem Vorsprung des zweiten Kolbenkörpers ausgefüllt ist und sich die eventuell im Flüssigkeitskanal verbleibende Flüssigkeitsmenge deutlich reduziert.

Als weiterer Vorteil ist zu sehen, dass der Flüssigkeitskanal unter diesem Aspekt größer dimensioniert werden kann, ohne die im Kanal verbleibende Flüssigkeitsmenge zu erhöhen. Das bringt insbesondere dann Vorteile, wenn der erste Kolben als Spritzgussteil hergestellt wird, weil sehr kleine und im Verhältnis zum Durchmesser sehr lange Kanäle einen vorzeitigen Werkzeugverschleiß mit sich bringen. Die Prozesssicherheit bei der Herstellung des ersten Kolbenkörpers wird entsprechend höher.

Bevorzugt ist der Vorsprung des ersten und/oder zweiten Kolbenkörpers ausgestaltet, um die Flüssigkeitskapsel zu öffnen, insbesondere aufzustechen. Wenn Vorsprünge von sowohl dem ersten wie auch dem zweiten Kolbenkörper verwendet werden, um die Flüssigkeitskapsel zu öffnen, bietet dies den Vorteil, dass eine besonders sichere und schnelle Öffnung ermöglicht wird und ein besonders schneller Abfluss der Flüssigkeit durch den Kanal hindurch in die Mischkammer erreicht werden kann. Flüssigkeitsverluste in radialer Richtung können so vermieden werden. Ferner wird mit einem Aufstechen der Flüssigkeitskapsel ein sehr gezielter öffnungsprozess erreicht, so dass herstellerseitig sehr präzise festgelegt werden kann, wo die Flüssigkeitskapsel aufzustechen ist, um einen schnellen und verlustfreien Abfluss der Flüssigkeit in den Mischraum zu gewährleisten.

Bevorzugt ist der Kanal ausgestaltet, um den Vorsprung des zweiten Kolbenkörpers aufzunehmen. Eine solche Anordnung ist besonders vorteilhaft, da der Vorsprung des zweiten Kolbenkörpers durch Einführen in den Kanal sicherstellt, dass keine Flüssigkeitsreste in dem Kanal verbleiben. Ein genaues Mischverhältnis von Fluid und Komponente im Mischraum lässt sich so noch besser einstellen. Ferner wird eine einfache Fertigung des ersten Kolbenkörpers im Spritzgussverfahren ermöglicht, da der Kanal bereits bei der Spritzgussfertigung eingefügt und nicht nachträglich eingebohrt werden muss. Besonders bevorzugt ist eine erfindungsgemäße Misch- und Applikationskapsel zur Herstellung eines Dentalpräparates, die aufweist: einen Kapselkörper mit einem Mischraum zum Aufnehmen einer Mischkomponente und zum Mischen des Dentalpräparates aus der Mischkomponente und einem Fluid und einer Austrittsöffnung zum Ausbringen des Dentalpräparates, einen im Kapselkörper verschiebbaren ersten Kolbenkörper, der den Mischraum im Kapselkörper begrenzt und der einen Kanal zum Führen des Fluids von einem Hohlraum in den Mischraum und einen Vorsprung aufweist, und einen im Kapselkörper verschiebbaren zweiten Kolbenkörper, der den Hohlraum zum Aufnehmen des Fluids aufweist, wobei der Hohlraum ausgestaltet ist, um den Vorsprung des ersten Kolbenkörpers aufzunehmen, wobei die Misch- und Applikationskapsel ferner ein Kanülen-Schwenk-Element an der Austrittsöffnung zum Applizieren des Dentalpräparates aufweist, wobei der Kapselkörper eine gasdurchlässige Filtermembran und/oder die Dichtung zwischen Kapselkörper und erstem Kolbenkörper Entlüftungsschlitze zum Abführen eines Gases aus dem Mischraum des Kapselkörpers aufweist, wobei der zweite Kolbenkörper als eine Flüssigkeitskapsel ausgestaltet ist und die Flüssigkeitskapsel mit einer Aluminiumfolie verschlossen ist, wobei die Aluminiumfolie auf wenigstens einer Seite siegelfähig beschichtet ist, wobei der erste Kolbenkörper mindestens einen Laschenkranz mit radial nach außen gebogenen und aus dem Kapselkörper herausragenden Laschen und der zweite Kolbenkörper an seinem aus dem Kapselkörper herausragenden Ende eine Einkerbung aufweist, wobei die Einkerbung zum Aufnehmen der gebogenen Laschen ausgestaltet ist, wobei der erste Kolbenkörper eine Randausnehmung aufweist, die ausgestaltet ist, um einen Randvorsprung des zweiten Kolbenkörpers aufzunehmen, wobei der zweite Kolbenkörper einen kegelförmigen Vorsprung aufweist, um die Flüssigkeitskapsel zu aufzustechen, aufzudrücken, aufzuschneiden, aufzubrechen, und/oder aufzustanzen, und wobei der Kanal ausgestaltet ist, um den kegelförmigen Vorsprung des zweiten Kolbenkörpers aufzunehmen. Besonders bevorzugt ist bei dieser Ausführungsform, dass der Vorsprung des ersten Kolbenkörpers und der Vorsprung des zweiten Kolbenkörpers ausgestaltet sind und miteinander in Wirkung stehen, um die Folie durch beidseitige Krafteinwirkung zu öffnen.

Bevorzugt weist der erste Kolbenkörper eine Randausnehmung auf, die ausgestaltet ist, um einen Randvorsprung des zweiten Kolbenkörpers aufzunehmen. Bevorzugt ist die Randausnehmung zum Führen des Randvorsprunges ausgestaltet. Bevorzugt bilden Randausnehmung und Randvorsprung eine Dichtung zwischen dem Hohlraum und einem Außenbereich der Misch- und Applikationskapsel. Eine solche Ausführungsform der erfindungsgemäßen Misch- und Applikationskapsel bietet den Vorteil, dass eine Verflüchtigung des Fluids in den Randbereichen des ersten und zweiten Kolbenkörpers weiter reduziert werden kann. Ferner bietet dies den Vorteil, dass eine mechanische Führung des zweiten Kolbenkörpers bei der Einführung in den ersten Kolbenkörper gegeben ist.

Bevorzugt weist der zweite Kolbenkörper einen umlaufenden Vorsprung auf, der insbesondere als Auskragung ausgebildet ist, und der einerseits zur Abdichtung zwischen ersten und zweiten Kolben dient und andererseits zusammen mit einem Absatz insbesondere im Inneren des ersten Kolbenkörpers bewirkt, dass der zweite Kolbenkörper nicht während der Lagerung und des Transportes unbeabsichtigt heraus rutscht.

Besonders bevorzugt ist eine erfindungsgemäße Misch- und Applikationskapsel zur Herstellung eines Dentalpräparates, die aufweist: einen Kapselkörper mit einem Mischraum zum Aufnehmen einer Mischkomponente und zum Mischen des Dentalpräparates aus der Mischkomponente und einem Fluid und einer Austrittsöffnung zum Ausbringen des Dentalpräparates, einen im Kapselkörper verschiebbaren ersten Kolbenkörper, der den Mischraum im Kapselkörper begrenzt und der einen Kanal zum Führen des Fluids von einem Hohlraum in den Mischraum und einen Vorsprung aufweist, und einen im Kapselkörper verschiebbaren zweiten Kolbenkörper, der den Hohlraum zum Aufnehmen des Fluids aufweist, wobei der Hohlraum ausgestaltet ist, um den Vorsprung des ersten Kolbenkörpers aufzunehmen, wobei die Misch- und Applikationskapsel ferner ein Kanülen-Schwenk-Element an der Austrittsöffnung zum Applizieren des Dentalpräparates aufweist, wobei der Kapselkörper eine gasdurchlässige Filtermembran und/oder die Dichtung zwischen Kapselkörper und erstem Kolbenkörper Entlüftungsschlitze zum Abführen eines Gases aus dem Mischraum des Kapselkörpers aufweist, wobei der zweite Kolbenkörper eine Flüssigkeitskapsel aufweist und die Flüssigkeitskapsel mit einer Aluminiumfolie verschlossen ist, wobei die Aluminiumfolie auf wenigstens einer Seite siegelfähig beschichtet ist, wobei der erste Kolbenkörper mindestens einen Laschenkranz mit radial nach außen gebogenen und aus dem Kapselkörper herausragenden Laschen und der zweite Kolbenkörper an seinem aus dem Kapselkörper herausragenden Ende eine Einkerbung aufweist, wobei die Einkerbung zum Aufnehmen der gebogenen Laschen ausgestaltet ist, wobei der erste Kolbenkörper eine Randausnehmung aufweist, die ausgestaltet ist, um einen Randvorsprung des zweiten Kolbenkörpers aufzunehmen, und wobei der Vorsprung des ersten Kolbenkörpers konvex bzw. abgerundet oder halbkugelförmig und der Boden der Flüssigkeitskapsel, d.h. die der Folie gegenüberliegende Wandung der Flüssigkeitskapsel, konkav bzw. abgerundet oder halbkugelförmig geformt sind.

Bevorzugt ist ferner, dass der Kapselkörper, erster, zweiter Kolbenkörper und/oder die Flüssigkeitskapsel zylindrisch ausgebildet sind. Besonders bevorzugt ist, dass deren Elemente, insbesondere Ausnehmungen, Vorsprünge, Hohlraum, Flüssigkeitskapsel, Widerstandselement, Entlüftungsvorrichtung, Mittel zum Ausstanzen und/oder Schneide, wie sie oben ausführlich beschrieben sind, rotationssymmetrisch ausgestaltet und/oder angeordnet sind.

Besonders bevorzugt ist der Kanal parallel zur Längsachse des ersten Kolbenkörpers angeordnet. Auch ist der Kanal bevorzugt im Zentrum des ersten Kolbenkörpers angeordnet. Ferner ist bevorzugt, dass der Kanal in einem Randbereich des ersten Kolbenkörpers angeordnet ist. Besonders bevorzugt ist, dass der Kanal Mittel zum Verhindern eines Austritts der Mischkomponente aufweist. Ein solches Mittel ist bevorzugt am dem Mischraum zugewandten Ende des Kanals angeordnet. Ferner ist das Mittel bevorzugt eine Verjüngung im Inneren des Kanals.

Bevorzugt ist weiterhin, dass die erfindungsgemäße Misch- und Applikationskapsel ein Kanülen-Schwenk-Element aufweist, welches mit der Austrittsöffnung gekoppelt ist, um das Dentalpräparat zu applizieren.

Bevorzugt weist der Kanal Mittel zum Verhindern eines Eindringens der Mischkomponente aus dem Mischraum in den Kanal auf. Besonders bevorzugt verhindern diese Mittel einen ungewollten Eintritt der Mischkomponente in den Kanal. Bevorzugt ist ferner, dass ein solches Mittel zwischen erstem Kolbenkörper und Kapselkörper angeordnet ist, beispielsweise als Folie, die den Mischraum von dem ersten Kapselkörper trennt. Insbesondere ist bevorzugt, dass das Mittel zum Verhindern des Eindringens der Mischkomponente aus dem Mischraum in den Kanal ein Rückschlagventil, eine flexible Rückschlagklappe, eine poröse Struktur, ein enger Spalt und/oder eine aufreißbare Membran ist. Mit einer solchen Ausgestaltung wird vorteilhaft erreicht, dass die erste Mischkomponente, insbesondere die Pulverkomponente, im Mischraum bis zur Aktivierung durch Vermischung mit dem Fluid verbleibt bzw. vor äußeren Einflüssen geschützt wird und das herstellerseitig bestimmte Soll-Mischverhältnis mit dem tatsächlich in dem Mischraum erreichten Ist-Mischverhältnis möglichst gut übereinstimmt.

Bevorzugt weist die Austrittsöffnung eine Kanüle auf, die an ihrer Innenseite Mittel zum Anordnen einer Verlängerung aufweist. Insbesondere ist bevorzugt, dass die Austrittsöffnung und/oder die Kanüle Mittel aufweist, die ein Anbringen einer insbesondere dünnen Verlängerung ermöglichen. Die Kanüle ist bevorzugt gerade oder (optional teilweise) gebogen ausgeführt. Es ist bevorzugt, dass die Kanüle an ihrer Innenseite Vorrichtungen aufweist, die das Anbringen bzw. Einstecken einer separaten, sehr dünnen Verlängerung ermöglichen. Diese Verlängerung kann beispielsweise unlösbar mittels eines Schnappmechanismus einrasten oder durch Friktion gehalten werden. Solche Verlängerungen werden beispielsweise für Wurzelkanalfüllungen eingesetzt, sind aber bei der Aktivierung oder dem Anmischen eher hinderlich, weil sie mechanisch empfindlich sind. Aus diesem Grund empfiehlt es sich, eine solche Verlängerung erst nach dem Anmischen anzubringen.

Die Austrittsöffnung einer erfindungsgemäßen Misch- und Applikationskapsel ist bevorzugt zum Verbinden mit einer Kanüle (oder einer anderen Vorrichtung zum Ausbringen des Dentalpräparates) ausgestaltet, d.h. sie weist keine Kanüle auf. Ein solch modularer Aufbau ist vorteilhaft, da die Kanüle (und optional die dünne Verlängerung) je nach Applikationszweck und -ort individuell ausgewählt werden kann.

Im Folgenden wird die Erfindung zum besseren Verständnis anhand einiger Ausführungsbeispiele näher erläutert, wobei
Figur 1 ein Beispiel einer Misch- und Applikationskapsel zeigt,
Figuren 2a bis 2d den Betrieb der Misch- und Applikationskapsel der Figur 1 zeigt;
Figuren 3a bis 3e Detailansichten der Misch- und Applikationskapsel der Figur 1 zeigen;
Figur 4 ein weiteres Beispiel einer Misch- und Applikationskapsel zeigt,
Figuren 5a bis 5d den Betrieb der Misch- und Applikationskapsel der Figur 4 zeigen;
Figur 6 ein weiteres Beispiel einer Misch- und Applikationskapsel zeigt,
Figuren 7a bis 7d den Betrieb der Misch- und Applikationskapsel der Figur 6 zeigen;
Figuren 8a bis 8e Detailansichten der Misch- und Applikationskapsel der Figur 6 zeigen;
Figur 9 eine Ausführungsform einer erfindungsgemäßen Misch- und Applikationskapsel zeigt;
Figuren 10a bis 10d den Betrieb der Misch- und Applikationskapsel der Figur 9 zeigen;
Figuren 11a bis 11e Detailansichten der Misch- und Applikationskapsel der Figur 9 zeigen;
Figur 12 eine Gesamtansicht einer erfindungsgemäßen Misch- und Applikationskapsel zeigt;
Figur 13 eine Detailansicht der Dichtung zwischen ersten Kolbenkörper und Kapselkörper einer erfindungsgemäßen Misch- und Applikationskapsel zeigt;
Figuren 14a bis 14c einen Querschnitt und Detailansichten einer erfindungsgemäßen Misch- und Applikationskapsel vor Aktivierung zeigen; und
Figuren 15a bis 15c die Misch- und Applikationskapsel der Figuren 14a bis 14c nach Aktivierung und Ausbringung der Dentalmasse zeigen.

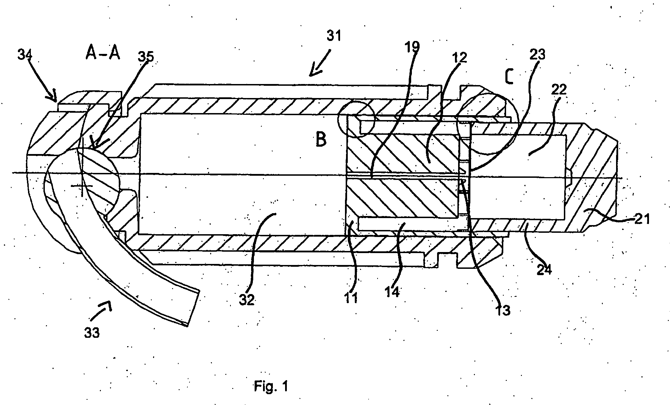

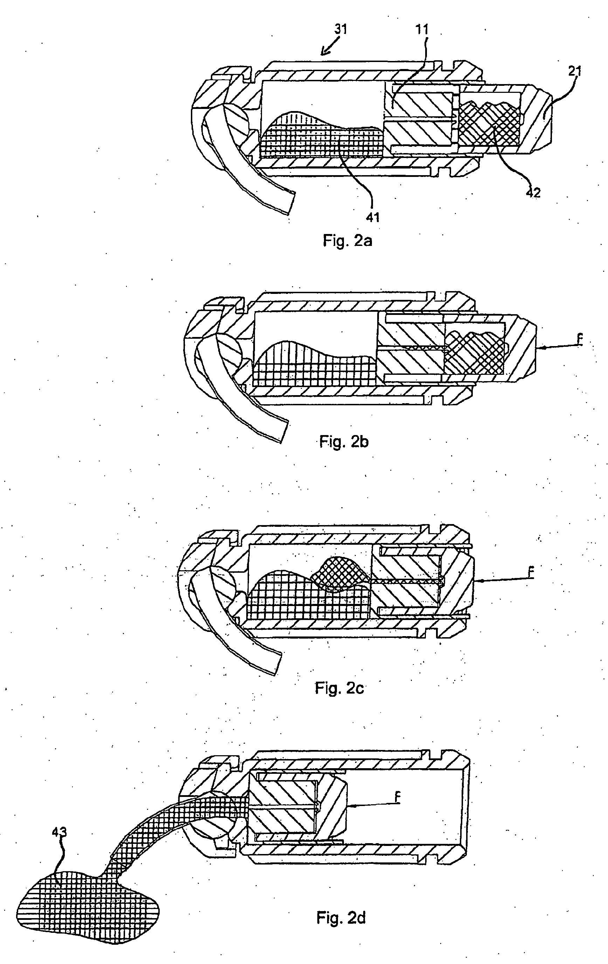

Figur 1 illustriert eine Ausführungsform einer Misch- und Applikationskapsel zur Herstellung eines Dentalpräparates 43 mit einem Kapselkörper 31, einem als Passagekolben ausgebildeten ersten Kolbenkörper 11 und einem als Flüssigkeitsbehälter ausgebildeten zweiten Kolbenkörper 21. Der Kapselkörper 31 ist im Wesentlichen zylindrisch ausgebildet und weist an einem ersten Ende Kappe 34 auf, an der eine Kanüle 33 mittels eines Gelenkes 35 drehbar angeordnet ist. Die Kanülen-Gelenkanordnung 33, 35 ist bevorzugt als Kanülen-Schwenk-Element ausgebildet. In einer ersten Stellung (wie in Figuren 1 und 2a bis 2c dargestellt) ist die Kappe 34 und die Kanüle 33 derart mittels des Gelenkes 35 gedreht, dass die Innenseite der Kanüle 33 nicht mit dem Mischraum 32 des Kapselkörpers 31 verbunden ist. In einer zweiten Stellung sind Kappe 34 und Kanüle 33 mittels des Gelenkes 35 so angeordnet (wie nachfolgend unter Bezugnahme auf Figur 2d erläutert wird), dass die im Inneren des Kapselkörpers 31 angemischte Dentalmasse 43 durch die Kanüle 33 ausgebracht werden kann.

Im Inneren des Kapselkörpers 31 ist der Mischraum 32 angeordnet, der als Hohlraum ausgebildet ist und im befüllten Zustand der Misch- und Applikationskapsel eine pulverförmige Komponente 41 aufweist, die mit Flüssigkeit 42 angemischt das Dentalpräparat 43 bildet. Der Mischraum 32 wird an dem ersten Ende des Kapselkörpers 31 durch die Kappen- und Kanülenanordnung 33, 34 und an dem offen ausgebildeten zweiten Ende des Kapselkörpers 31 durch den Passagekolben 11 begrenzt. Darüber hinaus kann die Komponente 41 nicht nur pulverförmig sondern stattdessen auch pastenförmig, flüssig oder fluid sein.

Der Passagekolben 11 ist entlang der Längsachse des Kapselkörpers 31 verschiebbar angeordnet. Er dient der Auspressung der im Mischraum 32 hergestellten Dentalmasse 43 durch die Kanüle 33. Der Passagekolben 11 weist einen Kanal 19 zum Führen eines Fluids 42 auf, der als Durchtrittskanal ausgebildet ist. Ein Fluid im Sinne dieser Anmeldung ist eine Substanz, die einer beliebig kleinen Scherspannung keinen Widerstand entgegensetzt, wie dies insbesondere für Gase und Flüssigkeiten zutrifft. In der in Figur 1 gezeigten Ausführungsform ist der Durchtrittskanal 19 entlang der zentralen Längsachse des Passagekolbens 11 ausgebildet. Der Durchtrittskanal 19 bildet die Verbindung zwischen Mischraum 32 und zweitem Kolbenkörper 21, der einen Hohlraum 22 zum Aufnehmen des Fluids 42 aufweist. Der Durchtrittskanal 19 ist ausgestaltet, um zu verhindern, dass die pulverförmige Komponente 42 in den Kanal ein- bzw. durch diesen hindurchtritt. Der Kanal 19 kann entsprechende Mittel aufweisen oder entsprechend eng ausgebildet sein.

Solche Mittel zum Verhindern eines Pulvereintritts in den Kanal können beispielsweise eine schwammartige, poröse Masse oder eine Rückschlagklappe bzw. ein Rückschlagventil oder eine dünne Membrane sein, die bei der Aktivierung aufreißt.

Der als Flüssigkeitsbehälter 21 ausgebildete zweite Kolbenkörper ist auf der dem Mischraum 32 abgewandten Seite des Passagekolbens 11 angeordnet. Der Flüssigkeitsbehälter 21 weist einen insbesondere siegelfähigen oder siegelfähig beschichteten Hohlraum 22 auf, in dem die Flüssigkeit 42 angeordnet ist, die der Anmischung des Dentalpräparates 43 in Kombination mit der pulverförmigen Komponente 41 dient. Der Hohlraum 22 des Flüssigkeitsbehälters 21 ist durch eine Folie 23 hermetisch verschlossen. Die Folie 23 ist bevorzugt eine Aluminiumfolie, die auf mindestens einer Seite siegelfähig beschichtet ist. Die Siegelschicht besteht bevorzugt aus einem Heißsiegellack, kann aber auch eine Laminatschicht sein.

Der Passagekolben 11 weist einen Vorsprung 12 als Stempel auf, der in Gestalt und/oder Volumen dem Hohlraum 22 entspricht. Der Vorsprung 12 weist wenigstens einen Dorn 13 auf, der dem Aufschneiden bzw. Ausstanzen der Folie 23 des Flüssigkeitsbehälters 21 dient.

Der Hohlraum 22 des Flüssigkeitsbehälters 21 ist seitlich durch einen radialen Vorsprung bzw. Randvorsprung 24 begrenzt, der den Randbereich des Flüssigkeitsbehälters 21 und die Seitenwand des Hohlraumes 22 bildet. Der Randvorsprung 24 dient der Führung des Flüssigkeitsbehälters 21 bei Verschiebung entlang der Längsachse des Kapselkörpers 31 und wird in entsprechend ausgebildeter Randausnehmung 14 im Randbereich des Passagekolbens 11 aufgenommen.

Ein Flüssigkeitsverlust aus dem Flüssigkeitsbehälter 21 wird erfindungsgemäß vermieden, da drei Seiten des Flüssigkeitsbehälters 21 so dickwandig ausgebildet sind, dass ein Flüssigkeitsverlust durch die Wände hindurch nicht auftritt. Ein Flüssigkeitsverlust durch die relativ dünnwandige Folie 23 wird dadurch verhindert, dass die Folie 23 wenigstens teilweise aus Metall gefertigt ist. Dabei ist beispielsweise eine Schicht der Folie 23 als Metallschicht ausgebildet und/oder bestimmte Bereiche der Folie 23 weisen einen Metallanteil auf. Die Flüssigkeit 42 kann so über einen langen Zeitraum hinweg im Hohlraum 22 aufbewahrt werden, ohne eine Flüssigkeitsverdunstung oder anderweitige Verflüchtigung zu riskieren.

Dadurch, dass aus dem Hohlraum 22 nahezu keine Flüssigkeit austreten kann, bleibt auch die Reinheit des hygroskopischen Pulvers 41 im Mischraum 32 über einen langen Zeitraum hinweg gewährleistet. Üblicherweise wird eine Misch- und Applikationskapsel in einem hermetisch verschlossenen Behältnis, wie einem Blister oder einem Schlauchbeutel, gelagert. Es wird erfindungsgemäß eine lange Lagerfähigkeit der Misch- und Applikationskapsel erreicht.

Auch weist das aus der pulverförmigen und der flüssigen Komponente 41, 42 gemischte Dentalpräparat 43 herstellerseitig genau abgestimmte Eigenschaften auf, da nahezu keine Flüssigkeitsreste in dem Hohlraum 22 verbleiben, wenn der Hohlraum 22 über den Vorsprung 12 geschoben ist. Da keine schleifende Dichtung das Fluid 42 der erfindungsgemäßen Misch- und Applikationskapsel begrenzt, kann ferner ein Flüssigkeitsverlust über eine solche Dichtung vermieden werden und die schleifenden Dichtungen zwischen Flüssigkeitsbehälter 21 und Passagekolben 11 und zwischen

Passagekolben 11 und Kapselkörper 31 können entsprechend leichtgängig ausgebildet werden, da sie nur im Moment der Aktivierung zum Einsatz kommen und somit nicht während der Lagerung mit Flüssigkeit in Kontakt stehen. Eine Aktivierung der Kapsel ist mit geringem Kraftaufwand möglich.

Auch ist es möglich, eine große Flüssigkeitsmenge in dem Flüssigkeitsbehälter 21 unterzubringen, der in einem solchen Fall entsprechend lang ausgebildet ist (und analog dazu der Vorsprung 12 des Passagekolbens 11), ohne dass der Durchmesser der Misch-und Applikationskapsel vergrößert werden müsste, was zu einer Unhandlichkeit in der Anwendung in der Mundhöhle des Patienten führen würde. Da die Aktivierung und die Ausbringung des Dentalpräparates 43 durch Kraftanwendung in nur einer Richtung, d.h. entlang der Längsachse der Misch- und Applikationskapsel, erfolgt, ist die Verwendung der Misch- und Applikationskapsel mit Hilfe nur eines Werkzeuges und in besonders einfacher Weise und in kurzer Zeit möglich.

Der Betrieb der Misch- und Applikationskapsel gemäß der in Figur 1 gezeigten Ausführungsform durch Aktivierung und Ausbringung des Dentalpräparates ist in Figuren 2a bis 2d dargestellt. Die Misch- und Applikationskapsel der Figuren 2a bis 2d weist den Kapselkörper 31, den Passagekolben 11 und den Flüssigkeitsbehälter 21 auf. Im Hohlraum 22 des Flüssigkeitsbehälters 21 ist eine Flüssigkeit 42 angeordnet, wobei der Hohlraum 22 durch eine Folie 23 verschlossen ist. Im Mischraum 32 des Kapselkörpers 31, der durch die Kappen- und Kanülenanordnung 33, 34 einerseits und dem Passagekolben 11 andererseits begrenzt wird, ist das Pulver 41 angeordnet.

Der Betrieb der Misch- und Applikationskapsel wird nun beginnend mit Figur 2a erläutert. Die Figur 2a zeigt die oben erläuterte Ausgangssituation. In einem ersten Verfahrensschritt (Figur 2b) wird Druck auf den Flüssigkeitsbehälter 21 in Richtung des Passagekolbens 11 entlang der Längsachse des Kapselkörpers 31 ausgeübt. Durch die Inkontaktbringung von Dornen 13 des Vorsprunges 12 des Passagekolbens 11 mit der Folie 23 des Flüssigkeitsbehälters 21 stechen die Dorne 13 die Folie 23 an und stanzen bei weiterer Verschiebung des Flüssigkeitsbehälters 21 einen Teilbereich der Folie 23 aus. Der Flüssigkeitshohlraum 22 wird geöffnet. Da die Dorne 13 nahe dem Durchtrittskanal 19 angeordnet sind, fließt die Flüssigkeit 42 unmittelbar durch den Durchtrittskanal 19 in den Mischraum 32 des Kolbenkörpers 31 ab.

Durch weiteres Verschieben des Flüssigkeitsbehälters 21 in Richtung des Passagekolbens 11 wird der Vorsprung 12 des Passagekolbens 11 in den Hohlraum 22 des Flüssigkeitsbehälters 21 eingeführt, er verdrängt die Flüssigkeit 42 aus dem Hohlraum 22 und drückt sie in den Durchtrittskanal 19 und den Mischraum 32 des Kapselkörpers 31. Dadurch, dass der Flüssigkeitsbehälter 21 seitlich durch den Randbereich 24 begrenzt ist, der in Ausnehmungen 19 in den Passage kolben 11 eingeführt wird, kann ein Flüssigkeitsverlust in dem Randbereich und über die Dichtung zwischen Passagekolben 11 und Flüssigkeitsbehälter 5 vermieden werden. Hier wirkt unterstützend, dass die einzige Entweichungsmöglichkeit für die in der Randausnehmung 14 befindliche Luft durch den Kanal 19 hindurch gegeben ist und diese Luft die Flüssigkeit 42 mit sich reißt. Die somit in den Mischraum eingebrachte Luft sowie die Luft, die durch die eintretende Flüssigkeit 42 verdrängt wird, entweichen durch die Entlüftungsvorrichtungen des ersten Kolbens und/oder die Entlüftungsvorrichtung des Kapselkörpers.

Ist der Vorsprung 12 vollständig in den Hohlraum 22 eingeführt, in dem sich in der Ausgangslage die Flüssigkeit 42 befunden hat, endet der erste Verfahrensschritt. Die herstellerseitig vorgesehene Flüssigkeitsmenge befindet sich nun in dem Mischraum 32 des Kapselkörpers 31. Anschließend erfolgt die Durchmischung in einem Mischgerät. Diese Mischgeräte sind in der Zahnarztpraxis allgemein üblich und versetzen die Kapsel in eine heftige Schüttelbewegung, die häufig im Wesentlichen parallel zur Längsachse der Kapsel gerichtet ist. Die Kapsel wird dafür in eine Aufnahmegabel eingespannt und durch eine Federkraft festgehalten. Die Einspannpunkte sind Kappe 34 und Flüssigkeitsbehälter 21. Das bewirkt, dass jeweils in der Umkehrlage der Schüttelbewegung neben der Federkraft der Aufnahmegabel zusätzlich eine Beschleunigungskraft auf den Flüssigkeitsbehälter 21 wirkt und eine etwaige unvollständige Flüssigkeitsentleerung beim Mischen noch verbessert wird. Je nach Art der Aufnahmegabel und des Mischgerätes ist es darüber hinaus möglich, auf dass die Aktivierung während des Einspannens und/oder während des Mischens stattfindet. Auf die manuelle Aktivierung kann in diesem Fall verzichtet werden.

Der nächste Verfahrensschritt zur Verwendung der Misch- und Applikationskapsel dient der Ausbringung der angemischten Paste 43 (Figur 2d). Dazu wird das Gelenk 35 in die zweite Stellung gebracht, so dass die Kanüle 33 eine Verbindung zwischen Mischraum 32 und Außenbereich der Misch- und Applikationskapsel bildet. Durch weiteres Druckausüben auf den Flüssigkeitsbehälter 21 wird der Flüssigkeitsbehälter 21 und gleichzeitig der Passagekolben 11 in Richtung des Mischraumes 32 verschoben und verringert dessen Volumen. Gleichzeitig wird der Mischraum 32 mittels der Entlüftungsvorrichtung des Kapselkörpers 31 oder Passagekolbens 11 weiter entlüftet, sofern die Luft nicht aus der Kanüle austritt. Die angemischte Paste 43 wird durch die Kanüle 33 ausgebracht und kann appliziert werden.

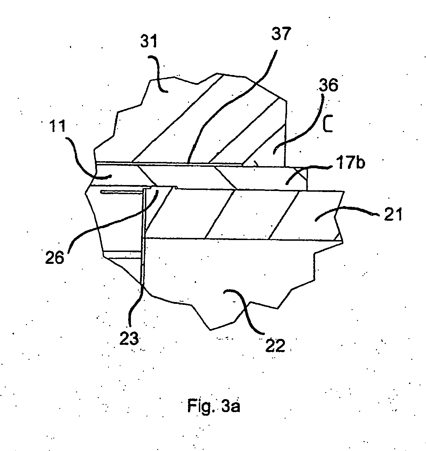

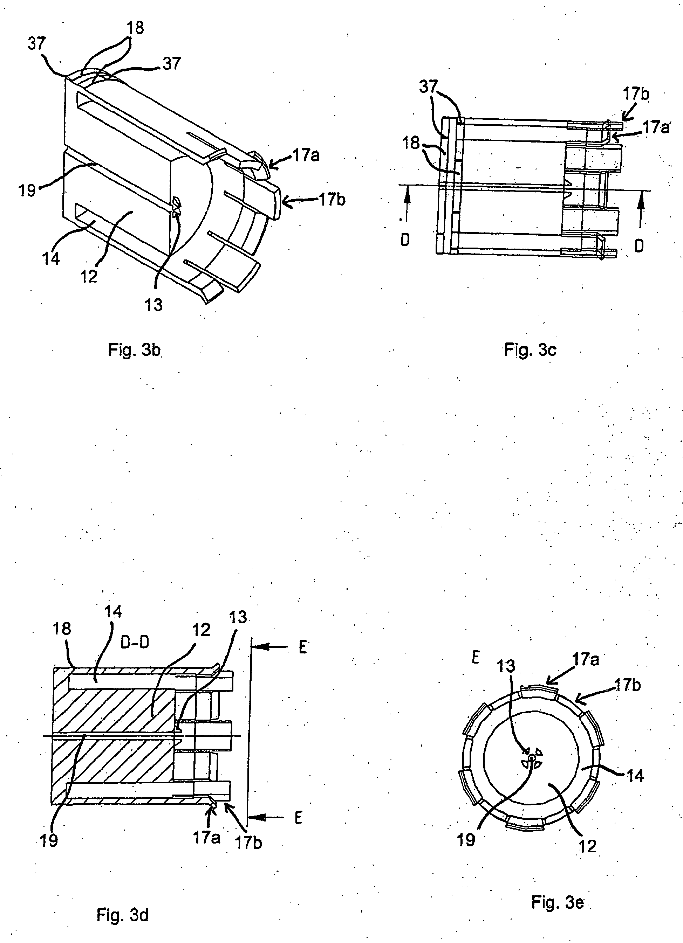

Figur 3a zeigt eine Detailansicht des Bereiches C der Figur 1, in der der Bereich zwischen Flüssigkeitsbehälter 21, Passagekolben 11 und Kapselkörper 31 dargestellt ist.

Kerbe 36 dient dabei der Aufnahme einer radial nach außen gebogenen Lasche 17a zwischen Kapselkörper 31 und Passagekolben 11, wie nachfolgend erläutert werden wird. Wie in Figur 3a gezeigt ist, weist der Flüssigkeitsbehälter 21 eine Auskragung 26 auf, die an einer Stufe des Innenraumes des Passagekolbens 11 derart anstößt, dass ein Herausrutschen des Flüssigkeitsbehälters 21 aus dem Passagekolben 11 verhindert wird. Ferner kann die Stufen- und Auskragungsanordnung dazu dienen, einen Flüssigkeitsaustritt zu verhindern, wenn die Folie 23 geöffnet ist und Flüssigkeit aus dem Hohlraum 22 fließt.

In Figur 3b ist eine halb aufgeschnittene Detailansicht des Passagekolbens 11 gezeigt. Der Passagekolben 11 gemäß der in Figur 1 gezeigten Ausführungsform weist einen Durchtrittskanal 19 auf, der sich im Zentrum des Vorsprungs 12 befindet. Ferner sind zwei von vier Dornen 13 in Figur 3b gezeigt, die der Ausstanzung eines zentralen Bereiches der Folie 23 des Flüssigkeitsbehälters 21 dienen. In Figur 3b ist ferner ein Laschenkranz gezeigt, der als Widerstandselement dient, um den bezüglich Figuren 2a bis 2d beschriebenen zweistufigen Betrieb, d.h. Aktivierung und Ausbringung, zu gewährleisten. Der Laschenkranz weist radial nach außen gebogene Laschen 17a und parallel zur Längsachse des Passagekolbens 11 ausgebildete Laschen 17b auf.

Figuren 3c bis 3e zeigen weitere Detailansichten des Passagekolbens 11 der Figur 1 gemäß der gezeigten Achsen.

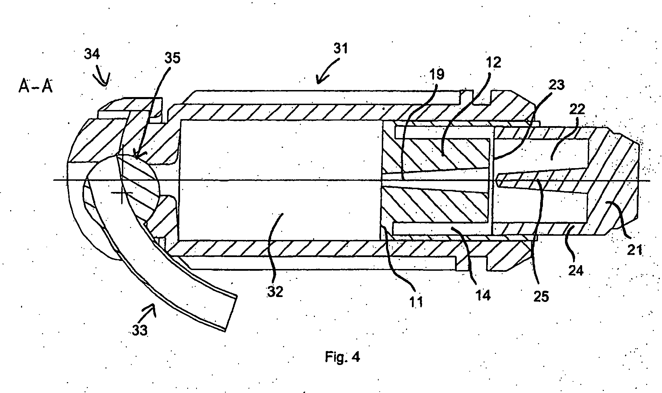

Die Figur 4 zeigt ein weiteres Beispiel der Misch- und Applikationskapsel. Es gelten entsprechende Ausführungen und Erläuterungen für Bauteile, die bereits oben mit gleichen Bezugszeichen erläutert worden sind, in analoger Weise im Folgenden.

Das in Figur 4 gezeigte Beispiel unterscheidet sich von dem Beispiel der Figur 1 durch die Ausgestaltung von Passagekolben 11 und Flüssigkeitsbehälter 21. Flüssigkeitsbehälter 21 weist in seinem Inneren einen Vorsprung auf, der als Dorn 25 ausgebildet ist. Der Dorn 25 entspricht in Ausgestaltung und/oder Volumen im Wesentlichen dem Durchtrittskanal 19 des Passagekolbens 11. Der Durchtrittskanal 19 des Passagekolbens 11 ist in der Ausführungsform der Figur 4 kegelförmig ausgestaltet, um den Dorn 22 aufzunehmen. Andere Querschnitte wie z.B. pyramidenförmig, zylindrisch oder sternförmig sind ebenfalls möglich.

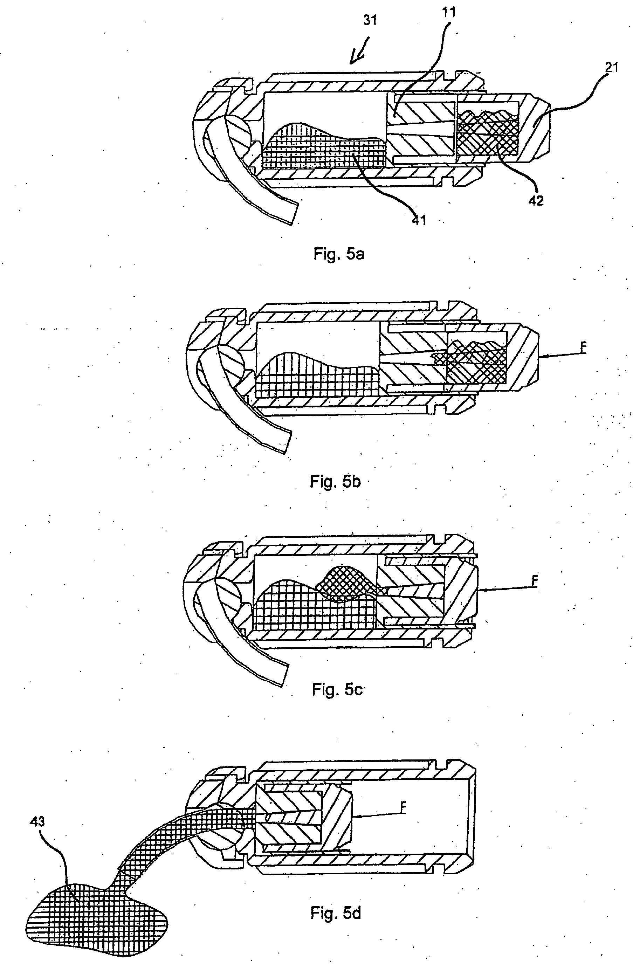

Figuren 5a bis 5d zeigen die Aktivierung der Misch- und Applikationskapsel der Figur 4 und die Ausbringung der angemischten Paste 43 durch die Kanüle 33. Dabei unterscheidet sich der Ablauf in Figuren 5a bis 5d von dem der Figuren 2a bis 2d in der Aktivierung der Misch- und Applikationskapsel. In Figur 5a ist der Ausgangszustand gezeigt, in dem ein Pulver 41 in der Mischkammer des Kolbenkörpers 31 angeordnet ist, der den Passagekolben 11 in seinem Inneren aufweist, und der Flüssigkeitsbehälter 21 auf der dem Mischraum 32 abgewandten Seite des Passagekolbens 11 angeordnet ist. Der Hohlraum 22 des Flüssigkeitsbehälters 21 weist Flüssigkeit 42 auf und' ist mit einer Folie 23 verschlossen. Im Inneren des Hohlraums 22 des Flüssigkeitsbehälters 21 ist Dorn 25 angeordnet. Durch Anwendung von Kraft auf den Flüssigkeitsbehälter 21 wird dieser auf den Passagekolben 11 geschoben. Der Vorsprung 12 des Passagekolbens 11 wirkt dabei als Widerstand, der der Folie 23 des Flüssigkeitsbehälters 21 entgegenwirkt und diese in der Mitte in Richtung des Hohlraumes eindellt.

Durch weiteres Druckausüben auf den Flüssigkeitsbehälter 21 öffnet bzw. perforiert Dorn 25 die Folie 23 im Bereich des Durchlasskanales 19, wie in Figur 5b gezeigt ist. Die Flüssigkeit kann nun durch den Durchtrittskanal 19 aus dem Hohlraum 22 austreten. Durch weiteres Einschieben des Flüssigkeitsbehälters 21 in den Passagekolben 11 wird der Hohlraum 22 von dem Vorsprung 12 eingenommen, wodurch der Hohlraum 22 flüssigkeitsentleert wird. Der Dorn 25 schiebt die Flüssigkeit durch den Durchtrittskanal 19 in die Mischkammer 32. Eine Durchmischung des Pulvers 41 und der Flüssigkeit 42 in der Mischkammer 32 findet, wie zuvor bereits beschrieben, beispielsweise in einem Mischgerät statt und die angemischte Paste 43 kann aus der Misch- und Applikationskapsel ausgeführt werden. Anstatt des Pulvers 41 kann sich bei dieser oder bei einer anderen Ausführungsform alternativ eine flüssige oder pastöse Substanz in der Mischkammer 32 befinden, die sich mit der Flüssigkeit 42 mit oder ohne Zuhilfenahme eines Mischgerätes vermischt.

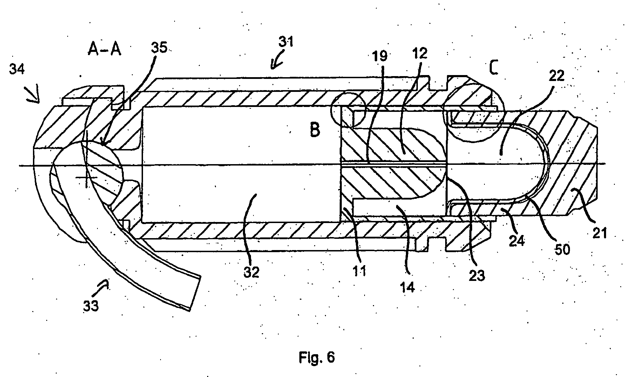

Figur 6 zeigt ein weiteres Beispiel der Misch- und Applikationskapsel. Das Beispiel der Figur 6 unterscheidet sich von denen der Figuren 1 und 4 in der Ausgestaltung des Passagekolbens 11 und des Flüssigkeitsbehälters 21. Der Flüssigkeitsbehälter 21 des Beispiels der Figur 6 ist ausgestaltet, um eine Flüssigkeitskapsel 50 aufzunehmen. Das Innere der Flüssigkeitskapsel 50 ist bevorzugt mit Siegellack beschichtet. In den Ausführungsbeispielen der Figuren 1, 4 und 9 ist der Hohlraum 22 als mit dem Flüssigkeitsbehälter 21 integrierte Flüssigkeitskapsel ausgestaltet. Es ist jedoch auch möglich die Ausführungsformen der Figuren 1, 4 und 9 mit einer separaten Flüssigkeitskapsel 50 auszustatten bzw. zu betreiben. Die Flüssigkeitskapsel 50 ist mit einer Folie 23 gegenüber dem Vorsprung 12 des Passagekolbens 11 hermetisch verschlossen. Die Flüssigkeitskapsel 50 kann hier beispielsweise aus einem Barrierematerial, wie z.B.

Aluminium, bestehen und weist an seiner Innenseite eine siegelfähige Schicht auf. Flüssigkeitsverluste durch Diffusion sind bei dieser Ausführungsform (insbesondere nahezu) vollständig ausgeschlossen. Der Vorsprung 12 des Passagekolbens 11 ist gemäß der Ausführungsform der Figur 6 mit einer runden, konvex halbkugelförmigen Oberfläche ausgestaltet, so dass die Öffnung der Folie 23 nicht über ein Ausstanzen oder Aufschneiden, sondern über ein Aufstoßen erfolgt.

Der Vorteil der separaten metallischen Flüssigkeitskapsel ist: Die Herstellung der Flüssigkeitskapsel 50 ist kostengünstig im Tiefziehverfahren möglich, wohingegen der Behälter 21 mit seiner vergleichsweise komplizierten Geometrie als Spritzgußteil hergestellt werden kann.

Gegenüber dem Stand der Technik, wie zum Beispiel in DE 3920537A1 beschrieben, ergibt sich hier der Vorteil, dass die Flüssigkeitskapsel 50 für die Flüssigkeitsentleerung nicht deformiert werden muss, weswegen sie eine wesentlich höhere Wandstärke aufweisen darf und somit im Verhältnis zum Durchmesser wesentlich tiefer tiefgezogen werden kann. Ferner können sich aufgrund der bei der Aktivierung nicht stattfindenden Verformung der dicken Wandstärke der Flüssigkeitskapsel 50 keine Falten bilden, in denen eine unbestimmte Flüssigkeitsmenge verbleiben würde.

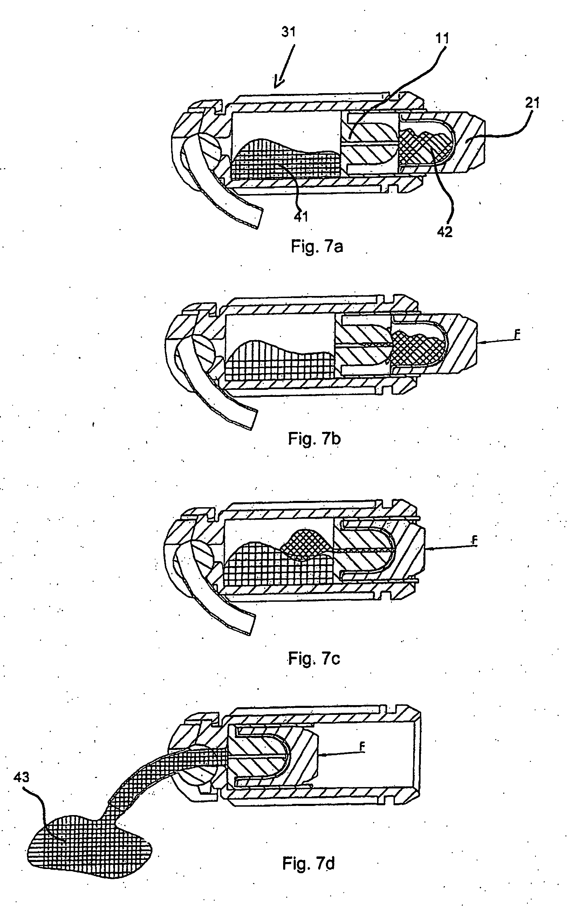

Die Aktivierung der Misch- und Applikationskapsel der Ausführungsform der Figur 6 und die Ausbringung der angemischten Paste 43 ist in Figuren 7a bis 7d dargestellt. Im Ausgangsstadium befinden sich Kapselkörper 31, Passagekolben 11 und Flüssigkeitsbehälter 21 mit Flüssigkeitskapsel 50 in einer Anordnung, wie sie in Figur 7a gezeigt ist. In der Flüssigkeitskapsel 50 ist die Flüssigkeit 42 und in der Mischkammer des Kapselkörpers 31 das Pulver 41 angeordnet. Durch Aufbringung von Kraft auf den Flüssigkeitsbehälter 21 durchbricht der Vorsprung 12 des Passagekolbens 11 die dünne Folie 23 und die Flüssigkeit des Hohlraums 22 erhält Zugang zu dem Durchtrittskanal 19. Die Flüssigkeit durchläuft den Durchtrittskanal 19 und vermengt sich mit dem Pulver 41 in dem Mischraum 32. Der Vorsprung 12 wird vollständig in die Flüssigkeitskapsel 50 eingeschoben, so dass Flüssigkeitsreste aus dem Hohlraum 22 der Flüssigkeitskapsel 50 bis zu dessen konkav halbkugelförmig geformten Boden herausgedrückt und in den Mischraum 32 gepresst werden. Nach Mischung der Flüssigkeit 42 mit dem Pulver 41 wird der Druck auf den Flüssigkeitsbehälter 21 und den Passagekolben 11 ausgeübt, so dass die angemischte Paste 43 durch die Kanüle 33 austritt.

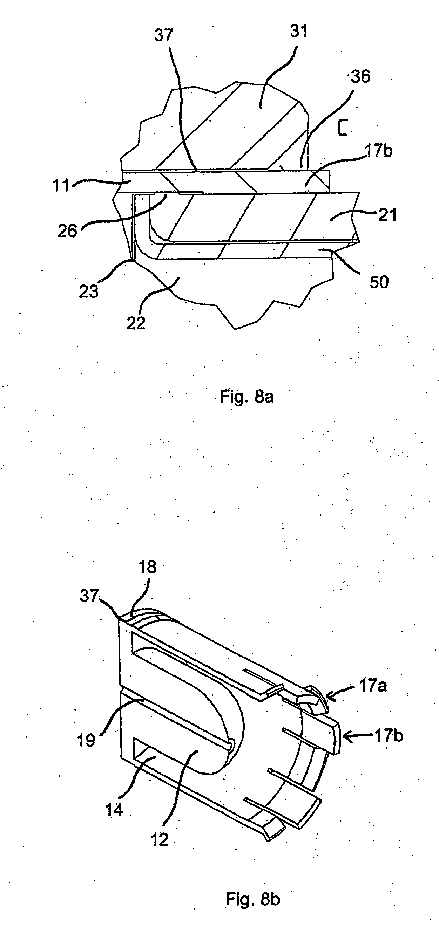

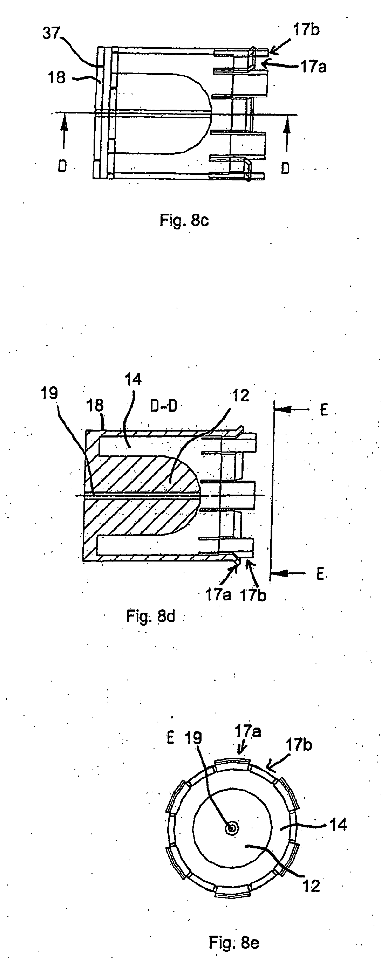

In Figur 8a ist eine Detailansicht des Bereichs C der Figur 6 gezeigt. Ähnlich wie in Figur 3a dargestellt, weist der Flüssigkeitsbehälter 21 einen äußeren radialen Vorsprung als Auskragung 26 auf, der mit einer Stufe des Passagekolbens 11 ineinander greift, um ein Herausrutschen des Flüssigkeitsbehälters 21 zu vermeiden und eine zusätzliche Abdichtung zur Randausnehmung 14 zu erreichen. Ebenfalls wie in Figur 3a weist der Kapselkörper 31 eine Ringkerbe 36 zur Aufnahme eines Widerstandselementes 17a auf. In Figur 8a ist ferner dargestellt, dass die Flüssigkeitskapsel 50, die den Hohlraum 22 begrenzt, in den Flüssigkeitsbehälter 21 eingeschoben ist.

Figur 8b zeigt eine halb aufgeschnittene Detailansicht des Passagekolbens 11 der Ausführungsform der Figur 6. Der Vorsprung 12 ist dabei mit einer runden, halbkugelförmigen Oberfläche versehen, wobei der Durchtrittskanal 19 im Zentrum des Vorsprungs 12 entlang dessen Längsachse angeordnet ist. Figuren 8c bis 8e zeigen weitere Detailansichten des Passagekolbens 11 der Figur 6 gemäß der gezeigten Achsen.

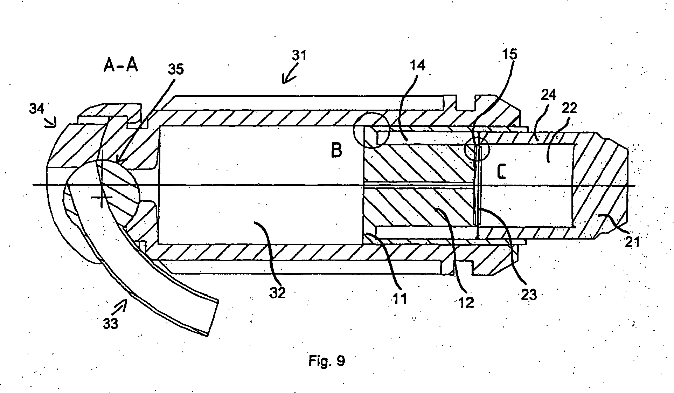

Figur 9 zeigt eine Ausführungsform der erfindungsgemäßen Misch- und Applikationskapsel. Die Ausführungsform der Figur 9 unterscheidet sich von denen der Figuren 1, 4 und 6 in der Ausgestaltung des Passagekolbens 11 und des Flüssigkeitsbehälters 21. Der Vorsprung 12 des Passagekolbens 11 ist zylinderförmig ausgebildet und weist eine Schneide 15 auf, die entlang des Umfanges der Vorsprungsoberfläche verläuft. Auf der der Folie 23 zugewandten Oberfläche des Vorsprungs 12 sind ferner Erhebungen 16 angeordnet, die in radialer Richtung zwischen Durchtrittskanal 19 und Schneide 15 verlaufen.

Der Flüssigkeitsbehälter 21 ist mit einem zylinderförmigen Hohlraum 22 ausgebildet, der Ausnehmungen zur Aufnahme der Schneide 15 und der Erhebungen 16 aufweist. Flüssigkeitsbehälter 21 ist stempelartig, d. h mit entsprechender Profilierung, ausgebildet, um Vorsprung 12, Schneide 15 und Erhebungen 16 so aufzunehmen, dass nahezu keine Hohlräume zwischen Passagekolben 11 und Flüssigkeitsbehälter 21 verbleiben, in denen Flüssigkeitsreste zurückbleiben könnten.

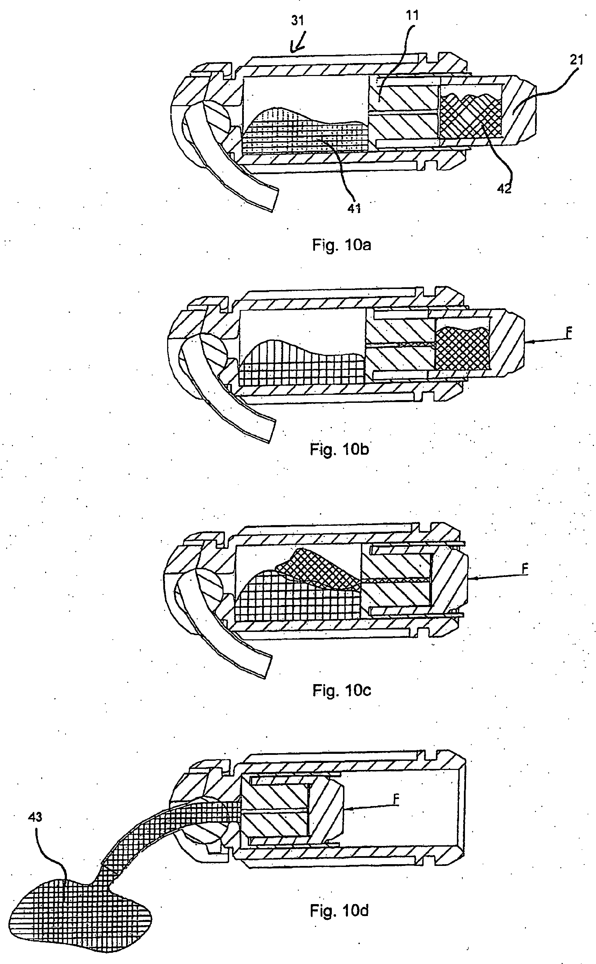

Der Betrieb der erfindungsgemäßen Misch- und Applikationskapsel der Figur 9 ist in den Figuren 10a bis 10d gezeigt. Die Ausgangssituation ist in Figur 10a dargestellt, in welcher der Kapselkörper 31 einen Mischraum 32 mit Pulver 41 aufweist, der Flüssigkeitsbehälter 21 eine Flüssigkeit 42 aufweist und der Passagekolben 11 zwischen Mischraum 32 und Flüssigkeitsbehälter 21 angeordnet ist. Zur Aktivierung der Misch- und Applikationskapsel wird der Flüssigkeitsbehälter 21 in Richtung des Passagekolbens 11 verschoben, wodurch die Schneide 15 die Folie 23 an deren Randbereich auftrennt und den Flüssigkeitsabfluss aus dem Hohlraum 22 in den Durchtrittskanal 19 ermöglicht (Figur 10b). Um zu vermeiden, dass die Folie 23 das Loch des Durchtrittskanals 19 für die Flüssigkeit 42 verschließt, weist der Flüssigkeitsbehälter 21 an seiner Innenoberfläche Kanäle auf, durch die die Flüssigkeit 42 abfließen kann, auch wenn sich die Folie 23 auf ihre Oberfläche legt. Die Kanäle des Flüssigkeitsbehälters 21 entsprechen dabei im Wesentlichen den Erhebungen 16 der Oberfläche des Vorsprungs 12 des Passagekolbens 11.

Durch weitere Krafteinwirkung auf den Flüssigkeitsbehälter 21 in Richtung des Passagekolbens 11 wird der Hohlraum 22 vollständig flüssigkeitsentleert und die Flüssigkeit in den Mischraum 32 zur Vermengung mit dem Pulver 41 gedrückt (Figur 10c). Das Dentalpräparat 43 wird durch Vermischung des Pulvers 41 und der Flüssigkeit 42 hergestellt und durch weitere Krafteinwirkung auf den Flüssigkeitsbehälter 21 und den Passagekolben 11 durch die Kanüle 33 als angemischte Paste 43 ausgedrückt (Figur 10d).

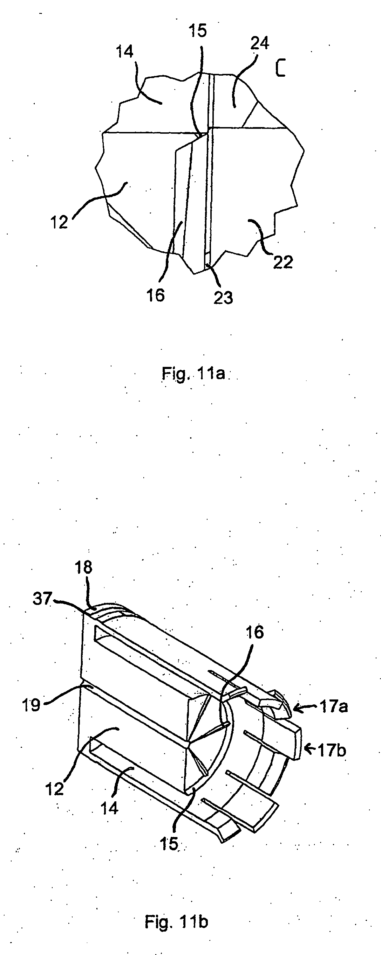

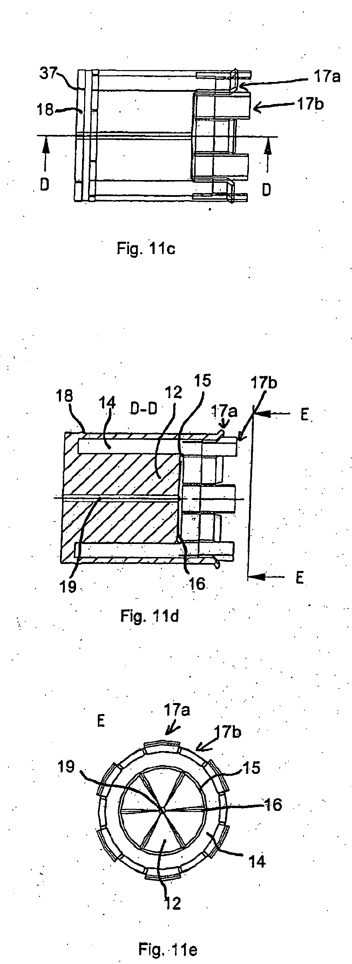

Figur 11a zeigt eine Detailansicht des Bereiches C der Figur 9. In dieser Detailansicht ist der Vorsprung 12 des Passagekolbens 11 dargestellt, der eine radiale Umlaufsschneide 15 aufweist. Ausgehend vom Loch des Durchtrittskanals 19 bis zur Schneide 15 sind Erhebungen 16 in radialer Richtung des Vorsprungs 12 angeordnet.

In Figur 11b ist eine halb aufgeschnittene Detailansicht des Passagekolbens 11 der Ausführungsform der Figur 9 gezeigt. Der Passagekolben 11 weist einen zylinderförmigen Vorsprung 12 auf, in dessen Inneren der Durchtrittskanal 19 angeordnet ist. Auf der dem Flüssigkeitsbehälter 21 zugewandten Oberfläche des Vorsprungs 12 ist eine ringförmige Schneide 15 angeordnet. Die Schneide 15 ist bevorzugt trichterförmig ausgebildet, um einen gezielten Abfluss der Flüssigkeit 42 zu unterstützen. Zwischen der Schneide 15 und dem Durchtritts-kanal 19 sind in radialer Ausrichtung Erhebungen 16 zur Abführung der Flüssigkeit angeordnet. Ferner verhindern die Erhebungen 16 in Kombination mit den entsprechenden Kanälen an der Innenoberfläche des Flüssigkeitsbehälters 21, das die Folie 23 den Durchtrittskanal 19 abdichtet. Figuren 11c bis 11e zeigen weitere Detailansichten des Passagekolbens 11 der Figur 9 gemäß der gezeigten Achsen. An Stelle der gezeichneten Erhebungen sind alternativ Einkerbungen bzw. Kanäle denkbar, die demselben Zweck dienen.

Ferner zeigt Figur 11c eine Auskragung 18 mit Entlüftungsschlitzen 37. Diese Anordnung ist in diesem Beispiel doppelt hintereinander ausgeführt, wobei die Entlüftungsschlitze 37 nicht miteinander fluchten und somit eine Labyrinthdichtung bilden.

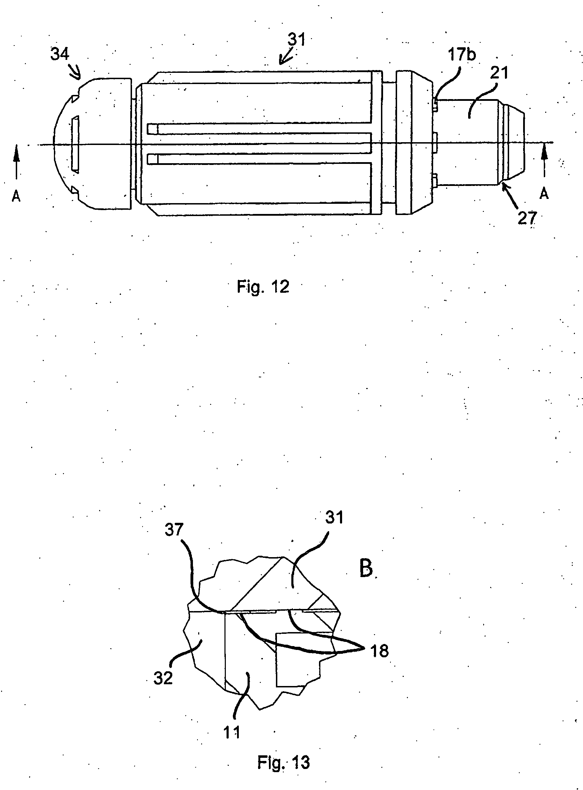

Figur 12 zeigt eine Außenansicht der erfindungsgemäßen Misch- und Applikationskapsel. Es ist der Kapselkörper 31 dargestellt, an dessen ersten Ende sich die Kappe 34 befindet. Das zweite Ende des Kapselkörpers 31 ist offen ausgestaltet, um den Passagekolben 11 und den Flüssigkeitsbehälter 21 aufzunehmen. Der Passagekolben 11 weist, wie oben beschrieben ist, parallel zur Längsachse ausgerichtete, d.h. gerade, Laschen 17b und gebogene Laschen 17a auf, die ein Verschieben des Passagenkolbens 11 in Richtung des Mischraumes 32 erst erlauben, wenn eine vorbestimmte Kraft auf den Passagekolben 11 bzw. den Flüssigkeitsbehälter 21 einwirkt. Die geraden Laschen 17b sind in Figur 12 zu erkennen, wohingegen die gebogenen Laschen 17a nicht dargestellt sind, da sie in der Ringkerbe 36 des Kapselkörpers eingreifen. Die gebogene Laschen 17a bewirken, dass bei Krafteinwirkung auf den Flüssigkeitsbehälter 21 entlang der Längsachse der Misch-und Applikationskapsel der Flüssigkeitsbehälter 21 in einem ersten Schritt auf den Passagekolben 11 aufgeschoben wird, ohne dass sich der Passagekolben 11 in den Mischraum 32 schiebt, und dass sich in einem zweiten Schritt, in dem die Flüssigkeit 42 aus dem Hohlraum 22 durch Einführung des Vorsprungs 12 bereits ausgepresst ist, der Passagekolben 11 in den Mischraum 32 bewegt. Die geraden Laschen 17b dienen der verbesserten Führung des Flüssigkeitskolbens 21 und hindern diesen an einem ungewollten Verkanten.

Figur 13 zeigt eine Detailansicht des Bereiches B von Figur 9 zwischen dem Kapselkörper 31 und dem Passagekolben 11. Der Passagekolben 11 weist eine Auskragung 18 auf, die der Abdichtung zwischen Mischraum 32 und dem Außenbereich der Misch- und Applikationskapsel dient. Die Auskragung 18 weist Entlüftungsschlitze 37 auf, die ermöglichen, dass ein Druckausgleich bei Ineinanderschieben des Teleskopzylinders zwischen Mischraum 32 und Außenbereich der Misch- und Applikationskapsel gegeben ist. Optional weist der Passagekolben 11 mehrere radial angeordnete Auskragungen 18 auf, die jeweils durch Entlüftungsschlitze 37 unterbrochen sind, so dass sich ein Entlüftungslabyrinth ergibt, welches für Gas, nicht jedoch für das Pulver oder Fluid und die hergestellte Dentalmasse, leicht zu durchdringen ist.

Zusätzlich oder alternativ weist die erfindungsgemäße Misch- und Applikationskapsel eine gasdurchlässige Membran beispielsweise im Kappenbereich 34 auf, durch die eine Entlüftung des Mischraumes 32 bei Einschieben des Flüssigkeitskolbens 21 in den Passagekolben 11 und des Passagekolbens 11 in den Mischraum 32 erfolgt. Die gasdurchlässige Membran ist dabei undurchlässig für die pulverförmige Komponente 41, das Fluid 42 und die angemischte Dentalpräparatsmasse 43.

Durch Entlüftungsvorrichtungen wie Entlüftungsschlitz 37 und/oder Entlüftungsmembran wird erreicht, dass der durch Aktivieren der Misch- und Applikationskapsel aufgebaute Druck im Mischraumes 32 schnell abgebaut werden kann, so dass es der Flüssigkeit 42 erleichtert wird, in den Mischraum 32 einzufließen. Ferner wird gleichzeitig der Kraftaufwand zum Einschieben des Flüssigkeitsbehälters 21 und des Passagekolbens 11 verringert. Durch schnelles Abführen der Luft aus dem Innenraum des Kapselkörpers 31, sowohl im Mischraum 32 als auch im Hohlraum zwischen Passagekolben 11 und Flüssigkeitsbehälter 21, wird erreicht, dass die Flüssigkeit 42 sich insbesondere nicht in dem Bereich zwischen Passagekolben 11 und Flüssigkeitsbehälter 21 verteilt. Dieser Zwischenraum bleibt trocken, auch wenn die Folie 23 nicht in ihrem zentralen, sondern in einem radialen Bereich geöffnet wird.

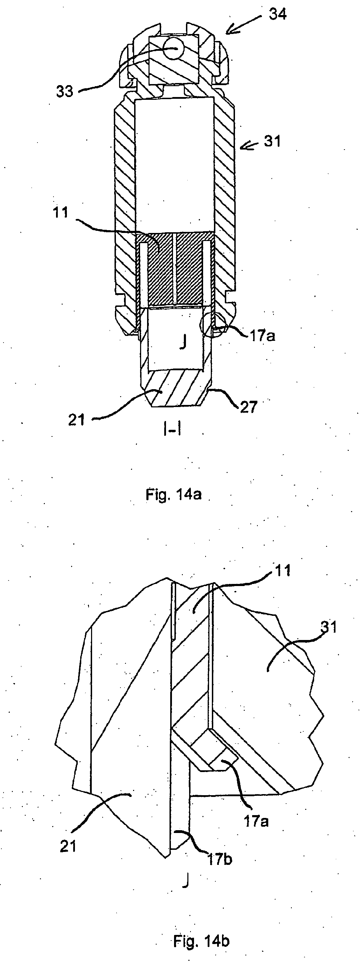

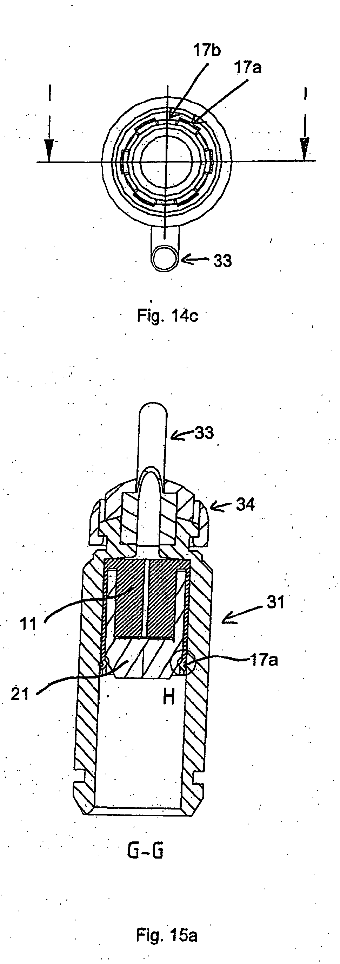

In Figur 14a ist ein Querschnitt einer erfindungsgemäßen Misch- und Applikationskapsel dargestellt, anhand derer der Betrieb der nach außen gebogenen Laschen 17a erläutert wird. Eine erfindungsgemäße Misch- und Applikationskapsel weist, wie oben erläutert ist, einen Kapselkörper 31, einen Passagekolben 11 und einen Flüssigkeitsbehälter 21 auf. Die Kappen- und Kanülenanordnung 33, 34 dient der Ausbringung des hergestellten Dentalpräparates 43. Der Bereich zwischen Kapselkörper 31, Passagekolben 11 und Flüssigkeitsbehälter 21 ist in Figur 14b detailliert dargestellt.

Mit der in Figur 14b gezeigten Anordnung der radial nach außen vorstehend angeordneten Widerstandelemente 17a wird der Passagekolben 11 während des Aktivierungsvorganges daran gehindert, ungewollt in den Mischraum 32 verschoben zu werden, auch wenn die Flüssigkeit 42 im Hohlraum 22 noch nicht vollständig ausgepresst ist. Am hinteren Ende des Passagekolbens 11, d.h. an demjenigen Ende des Passagenkolbens 11, welches dem Mischraum 32 abgewandt ist, sind mehrere nach außen gebogene Laschen 17a angeordnet. Die geraden Laschen 17b, die parallel zu der Längsachse des Passagekolbens 11 ausgerichtet sind, dienen insbesondere der Führung des Passagekolbens 11 innerhalb des Kapselkörpers 31.

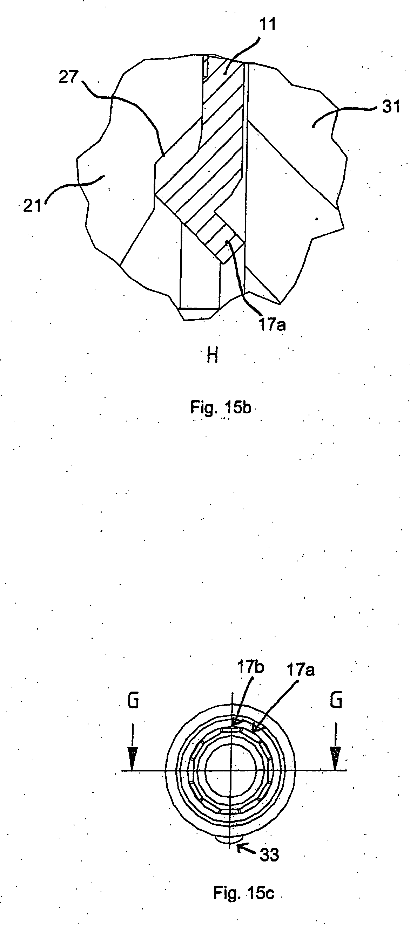

Wird der Flüssigkeitsbehälter 21 in Richtung des Passagekolbens 11 verschoben, hindern die nach außen gebogenen Laschen 17a den Passagekolben 11 daran, weiter in den Kapselkörper 31 einzudringen. Mittels der nach außen gebogenen Laschen 17a wird erreicht, dass der Außendurchmesser des Passagekolbens 11 wenigstens teilweise größer als der Innendurchmesser des Kolbenkörpers 31 ist. In dem in den Figuren 14a bis 14c und 15a bis 15c gezeigten Ausführungsbeispiel ragen die gebogenen Laschen 17a in den Außenraum der Misch- und Applikationskapsel. Optional kann jedoch im Inneren des Kapselkörpers 31 eine Ringnut angeordnet sein, in die die gebogenen Laschen 17a in gleicher Weise eingreifen, wie in Figur 14b an dem Außenbereich des Kolbenkörpers 31 illustriert ist.

Erst wenn der Flüssigkeitsbehälter 21 vollständig in den Passagekolben 11 eingeschoben ist, erhalten die gebogenen Laschen 17a in einer Einkerbung 27 des Flüssigkeitsbehälters 21 Platz, um die Bewegung des Passagekolbens 11 in den Mischraum 32 freizugeben. Die Einkerbung 27 ist bevorzugt als ein reduzierter Durchmesser am hinteren Ende des Flüssigkeitsbehälters 21 ausgebildet. Dabei entspricht die Anordnung der Einkerbung 27 an dem Flüssigkeitsbehälter 21 dem Zustand, wenn der Vorsprung 12 den Hohlraum 22 entleert hat. Die geraden Laschen 17b dienen sowohl der Führung des Passagekolbens 11 innerhalb des Kapselkörpers 31 wie auch der Führung des Flüssigkeitsbehälters 21 innerhalb des Passagekolbens 11.

Erfindungsgemäß sind weitere Ausführungsformen vorgesehen, bei denen der Durchtrittskanal 19 parallel zu der Längsachse des Passagekolbens 11 angeordnet ist.

Auch ist möglich, den Durchtrittskanal 19 in anderweitiger Orientierung innerhalb des Passagekolbens 11 auszubilden, um die Flüssigkeit 42 aus dem Hohlraum 22 in den Mischraum 32 des Kapselkörpers 31 zu überführen. Auch sind andere als die in den Figuren gezeigten geometrische Ausgestaltungen des Vorsprungs 12 und in entsprechender Weise des Hohlraumes 22 denkbar, wie z.B. pyramidenförmige, zylindrische, kegelförmige Formen. Die Öffnung der Folie 23 erfolgt bevorzugt durch Ausstanzen, Aufstoßen, Aufschneiden oder andere Öffnungsmechanismen, die auf der Druckeinwirkung auf den Flüssigkeitsbehälter 21 gegenüber dem Passagekolben 11 beruhen. Eine Öffnung der Folie 23 kann in dem Zentrum oder auch in den Randbereichen erfolgen. Auch ist es optional, dass die Ausführungsformen der Figuren 1, 4 und 9 eine Flüssigkeitskapsel 50 aufweisen oder der Flüssigkeitsbehälter 21 der Figur 6 ohne separate Flüssigkeitskapsel 50 verwendet wird.

## Patentansprüche

1. Misch- und Applikationskapsel zur Herstellung eines Dentalpräparates (43); wobei die Misch- und Applikationskapsel aufweist:
einen Kapselkörpers (31) mit einem Mischraum (32) zum Aufnehmen einer Mischkomponente (41) und zum Mischen des Dentalpräparates (43) aus der Mischkomponente (41) und einem Fluid (42) und mit einer Austrittsöffnung (33) zum Ausbringen des Dentalpräparates (43),
einen im Kapselkörper (31) verschiebbaren ersten Kolbenkörper (11), der den Mischraum (32) im Kapselkörper (31) begrenzt und der einen Kanal (19) zum Führen des Fluids (42) von einem Hohlraum (22) in den Mischraum (32) und einen Vorsprung (12) aufweist, und
einen im Kapselkörper (31) relativ zu dem ersten Kolbenkörper (11) verschiebbaren zweiten Kolbenkörper (21), der den Hohlraum (22) zum Aufnehmen des Fluids (42) aufweist, wobei der Hohlraum (22) ausgestaltet ist, um den Vorsprung (12) des ersten Kolbenkörpers (11) aufzunehmen, wobei
der Hohlraum (22) zur Aufnahme einer mit einer Folie (23) verschlossenen Flüssigkeitskapsel ausgestaltet ist oder der zweite Kolbenkörper (21) als eine mit einer Folie (23) verschlossenen Flüssigkeitskapsei ausgebildet ist, dadurch gekenntzeichnet, dass der Vorsprung (12) des ersten Kolbenkörpers (11) eine Schneide (15) zum Aufschneiden der Folie (23) aufweist, wobei die Schneide (15) entlang des Umfanges des Vorsprungs (12) angeordnet ist.

2. Misch- und Applikationskapsel nach Anspruch 1, **dadurch gekennzeichnet, dass** die Schneide trichterförmig ausgebildet ist

3. Misch- und Applikationskapsel nach Anspruch 1 oder 2, **dadurch gekennzeichnet, dass** zwischen der Schneide (15) und dem Kanal (19) in radialer Ausrichtung Erhebungen (16) oder Kanäle zur Abführung der Flüssigkeit angeordnet sind.

4. Misch- und Applikationskapsel nach Anspruch 1 oder 2, wobei das den Mischraum (32) begrenzende Ende des ersten Kolbenkörpers (11) bei Ausbringung des Dentalpräpäratee (13) als Kolben wirkt, um das angemtschte Dentalpräparat (43) aus dem Kapselkörper (31) herauszudrücken.

5. Misch- und Äpplikationskapsel nach einem der vorstehenden Ansprüche, wobei die Folie (23) wenigstens eine Schicht aufweist, die wenigstens teilweise eine Metallschicht ist, und/oder wobei die Flüssigkeitskapsel wenigstens teilweise Metall aufweist.

6. Misch- und Applikationskapsel nach einem der vorstehenden Ansprüche, wobei die MisCh- und Applikationskapsel, insbesondere der erste Kolbenkörper (11), ein Widerstandselement (17a) zum kontrollierten Verhindern eines Verschiebehs des ersten Kolbenkörpers (11) in den Kapselkörper (31) aufweist.

7. Misch- und Applikationskapsel nach einem der vorstehenden Ansprüche, wobei der Kapselkörper (31) eine Entlüftungsvorrichtung zum Abführen eines Gases aus dem Mischraum (32) des Kapselkörpers (31) aufweist.

8. Misch- und Äpplikätionska.psel nach einem der vorstehenden Ansprüche, wobei der Vorsprung (12) des ersten Kolbenkörpers (11) ausgestaltet ist. um die Flüssigkeitskapsel zu öffnen, und/oder wobei der Vorsprung des ersten Kolbenkörpers (11) Mittel (13) zum Ausstanzen eines Bereiches der Folie (23) aufweist, der dem Kanal (19) gegenüberliegt:

9. Misch- und Applikationskapsel nach einem der vorstehenden Ansprüche, wobei der zweite Kolbenkörper (21) einen Vorsprung (26) aufweist, um die Flüssigkeitskapsel zu öffnen.

10. Misch- und Applikationskapsel nach einem der vorstehenden Ansprüche, wobei der Vorsprung (12. 25) des ersten und/oder zweiten Kolbenkörpers (11, 21) ausgestaltet ist, um die Flüssigkeitskapsel aufzustechen.

11. Misch- und Applikationskapsel nach einem der vorstehenden Ansprüche, wobei der Kanal (19) ausgestaltet ist. um den Vorsprung (25) des zweiten Kolbenkörpers (21) aufzunehmen.

12. Misch- und Applikationskapsel nach einem der vorstehenden Ansprüche, wobei der erste Kolbenkörper (11) eine Randausnehmung (14) aufweist, die ausgestaltet ist, um einen Randvorsprung (12) des zweiten Kolbenkörpers (21) aufzunehmen.

13. Misch- und Applikationskapsel nach einem der vorstehenden Ansprüche wobei der Kanal (19) Mittel zum Verhindern eines Eindringens der Mischkomponente (41) aus dem Mischraum (32) in den Kanal (19) aufweist.

14. Misch- und Applikationskapsel nach Anspruch 13, wobei das Mittel zum Verhindern des Eindringens der Mischkomponente (41) aus dem Mischraum (32) in den Kanal (19) ein Rückschlagventil, eine flexible Rückschlagklappe, eine poröse Struktur, ein Spalt und/oder eine aufreißbare Membrane ist.

15. Misch- und Applikatiortskapsel nach einem der vorstehenden Ansprüche, wobei die Austrittsöffnung (33) eine Kanüle aufweist, die an ihrer Innenseite Mittel zum Anordnen einer Verlängerung aufweist.

## Claims

1. A mixing and application capsule for producing a dental preparation (43), wherein the mixing and application capsule has:
a capsule body (31) having a mixing chamber (32) to receive a blend component (41) and to mix the dental preparation (43) made of the blend component (41) and a fluid (42) and having an outlet (33) to discharge the dental preparation (43),
a first plunger body (11), displaceable in the capsule body (31), which bounds the mixing chamber (32) in the capsule body (31) and which has both a channel (19) to guide the fluid (42) from a cavity (22) into the mixing chamber (32) and a projection (12), and
a second plunger body (21), displaceable in the capsule body (31) relative to the first plunger body (11), which has the cavity (22) to receive the fluid (42), wherein the cavity (22) is formed to receive the projection (12) of the first plunger body (11), wherein
the cavity (22) is formed to receive a fluid capsule closed with a film (23) or the second plunger body (21) is in the form of a fluid capsule closed with a film (23),
**characterized in that** the projection (12) of the first plunger body (11) has a cutting edge (15) to cut open the film (23), wherein the cutting edge (15) is arranged along the periphery of the projection (12).

2. A mixing and application capsule according to claim 1, **characterized in that** the cutting edge is funnel-shaped.

3. A mixing and application capsule according to claim 1 or 2, **characterized in that** protuberances (16) or channels to carry away the fluid are arranged between the cutting edge (15) and the channel (19) in a radial orientation.

4. A mixing and application capsule according to claim 1 or 2, wherein the end, bounding the mixing chamber (32), of the first plunger body (11) acts as a plunger upon discharge of the dental preparation (43), in order to push the mixed dental preparation (43) from the capsule body (31).

5. A mixing and application capsule according to any one of the preceding claims, wherein the film (23) has at least one layer which is at least partially a metal layer, and/or wherein the fluid capsule at least partially has metal.

6. A mixing and application capsule according to any one of the preceding claims, wherein the mixing and application capsule, in particular the first plunger body (11), has a resistance member (17a) for controlled prevention of a displacement of the first plunger body (11) into the capsule body (31).

7. A mixing and application capsule according to any one of the preceding claims, wherein the capsule body (31) has a degasing device to guide a gas away from the mixing chamber (32) of the capsule body (31).

8. A mixing and application capsule according to any one of the preceding claims, wherein the projection (12) of the first plunger body (11) is formed to open the fluid capsule, and/or wherein the projection of the first plunger body (11) has means (13) to punch out a region, facing the channel (19), of the film (23).

9. A mixing and application capsule according to any one of the preceding claims, wherein the second plunger body (21) has a projection (25) in order to open the fluid capsule.

10. A mixing and application capsule according to any one of the preceding claims, wherein the projection (12, 25) of the first and/or second plunger body (11, 21) is formed to pierce the fluid capsule.

11. A mixing and application capsule according to any one of the preceding claims, wherein the channel (19) is formed to receive the projection (25) of the second plunger body (21).

12. A mixing and application capsule according to any one of the preceding claims, wherein the first plunger body (11) has an edge recess (14) which is formed to receive an edge projection (12) of the second plunger body (21).

13. A mixing and application capsule according to any one of the preceding claims, wherein the channel (19) has means to prevent a penetration of the blend component (41) from the mixing chamber (32) into the channel (19).

14. A mixing and application capsule according to claim 13, wherein the means to prevent the penetration of the blend component (41) from the mixing chamber (32) into the channel (19) is a check valve, a flexible swing check valve, a porous structure, a gap and/or a membrane able to be ripped open.

15. A mixing and application capsule according to any one of the preceding claims, wherein the outlet (33) has a cannula which at its inner side has means for arrangement of an extension.

## Revendications

1. Capsule de mélange et d'application pour la fabrication d'une préparation dentaire (43),
sachant que la capsule de mélange et d'application présente :
un corps de capsule (31) avec un espace de mélange (32) servant à recevoir un composant de mélange (41) et servant à mélanger la préparation dentaire (43) composée du composant de mélange (41) et d'un fluide (42) et avec une ouverture de sortie (33) servant à distribuer la préparation dentaire (43),
un premier corps de piston (11) pouvant être déplacé par coulissement dans le corps de capsule (31), lequel délimite l'espace de mélange (32) dans le corps de capsule (31) et qui présente un canal (19) servant à guider le fluide (42) d'un espace creux (22) dans l'espace de mélange (32) et une partie faisant saillie (12), et
un deuxième corps de piston (21) pouvant être déplacé par coulissement dans le corps de capsule (31) par rapport au premier corps de piston (11), lequel présente l'espace creux (22) servant à recevoir le fluide (42), sachant que l'espace creux (22) est configuré pour recevoir la partie faisant saillie (12) du premier corps de piston (11),sachant que l'espace creux (22) est configuré afin de recevoir une capsule de liquide fermée par un film (23) ou que le deuxième corps de piston (21) est réalisé sous la forme d'une capsule de liquide fermée par un film (23),
**caractérisée en ce que** la partie faisant saillie (12) du premier corps de piston (11) présente une lame (15) servant à couper le film (23), sachant que la lame (15) est disposée le long de la périphérie de la partie faisant saillie (12).

2. Capsule de mélange et d'application selon la revendication 1,
**caractérisée en ce que** la lame est réalisée en forme d'entonnoir.

3. Capsule de mélange et d'application selon la revendication 1 ou 2,
**caractérisée en ce que** des parties surélevées (16) ou des canaux servant à évacuer le liquide sont disposés entre la lame (15) et le canal (19) selon une orientation radiale.

4. Capsule de mélange et d'application selon la revendication 1 ou 2, sachant que l'extrémité, délimitant l'espace de mélange (32) du premier corps de piston (11) agit en tant que piston lors de la distribution de la préparation dentaire (43) afin de pousser en dehors du corps de capsule (31) la préparation dentaire (43) mélangée.

5. Capsule de mélange et d'application selon l'une quelconque des revendications précédentes, sachant que le film (23) présente au moins une couche, qui est au moins en partie une couche métallique, et/ou sachant que la capsule de liquide présente au moins en partie du métal.

6. Capsule de mélange et d'application selon l'une quelconque des revendications précédentes, sachant que la capsule de mélange et d'application, en particulier le premier corps de piston (11), présente un élément formant résistance (17a) servant à empêcher de manière contrôlée un déplacement par coulissement du premier corps de piston (11) dans le corps de capsule (31).

7. Capsule de mélange et d'application selon l'une quelconque des revendications précédentes, sachant que le corps de capsule (31) présente un dispositif d'aération servant à évacuer un gaz en dehors de l'espace de mélange (32) du corps de capsule (31).

8. Capsule de mélange et d'application selon l'une quelconque des revendications précédentes, sachant que la partie faisant saillie (12) du premier corps de piston (11) est configurée afin d'ouvrir la capsule de liquide, et/ou sachant que la partie faisant saillie du premier corps de piston (11) présente des moyens (13) servant à couper par estampage une zone du film (23), qui fait face au canal (19).

9. Capsule de mélange et d'application selon l'une quelconque des revendications précédentes, sachant que le deuxième corps de piston (21) présente une partie faisant saillie (25) afin d'ouvrir la capsule de liquide.

10. Capsule de mélange et d'application selon l'une quelconque des revendications précédentes, sachant que la partie faisant saillie (12, 25) du premier corps de piston et/ou du deuxième corps de piston (11, 21) est configurée afin de percer la capsule de liquide.

11. Capsule de mélange et d'application selon l'une quelconque des revendications précédentes, sachant que le canal (19) est configuré afin de recevoir la partie faisant saillie (25) du deuxième corps de piston (21).

12. Capsule de mélange et d'application selon l'une quelconque des revendications précédentes, sachant que le premier corps de piston (11) présente un évidement en bordure (14) qui est configuré afin de recevoir une partie faisant saillie de bordure (12) du deuxième corps de piston (21).

13. Capsule de mélange et d'application selon l'une quelconque des revendications précédentes, sachant que le canal (19) présente des moyens servant à empêcher l'entrée du composant de mélange (41) provenant de l'espace de mélange (32) dans le canal (19).

14. Capsule de mélange et d'application selon la revendication 13, sachant que le moyen servant à empêcher l'entrée du composant du mélange (41) provenant de l'espace de mélange (32) dans le canal (19) est une soupape anti-retour, une trappe anti-retour flexible, une structure poreuse, une fente et/ou une membrane déchirable.

15. Capsule de mélange et d'application selon l'une quelconque des revendications précédentes, sachant que l'ouverture de sortie (33) présente une canule, qui présente, au niveau de son côté intérieur, des moyens servant à recevoir une rallonge.
